# EUROPEAN PATENT SPECIFICATION

(11) **EP 2 907 241 B1**
(45) Date of publication and mention of the grant of the patent: **13.03.2019**
(21) Application number: 14859310.6
(22) Date of filing: 28.10.2014
(51) Int. Cl.: G06F 3/048

(54) **MOBILE TERMINAL AND METHOD OF CONTROLLING THE SAME**
MOBILES ENDGERÄT UND VERFAHREN ZUR STEUERUNG DAVON
TERMINAL MOBILE ET SON PROCÉDÉ DE COMMANDE

(30) Priority: 15.11.2013 KR 20130139287
(43) Date of publication of application: 19.08.2015
(73) Proprietor: LG Electronics Inc., Seoul 150-721 (KR)
(72) Inventor: JUNG, Eunsoo, Seoul 137-893 (KR); KIM, Jungwhan, Seoul 137-893 (KR); YIM, Soyeon, Seoul 137-893 (KR); RHEE, Jeongyoon, Seoul 137-893 (KR); PARK, Wonjoo, Seoul 137-893 (KR)
(74) Representative: Cabinet Plasseraud
(86) International application number: PCT/KR2014/010204
(87) International publication number: WO 2015/072677

(56) References cited:
- EP-A1- 2 226 741
- KR-A- 20110 092 754
- KR-A- 20110 123 138
- US-A1- 2004 239 648
- US-A1- 2006 210 126
- US-A1- 2007 008 066
- US-A1- 2010 231 356
- US-A1- 2010 231 356

## Description

### TECHNICAL FIELD

The present invention relates to a mobile terminal in which a fingerprint recognition function is executed and a method of controlling the mobile terminal.

### BACKGROUND ART

The increasing importance of the information management in the information age places particular emphasis on functions of an electronic apparatus in which information is input and output and data is stored. The electronic device equipped with such functions is categorized into a portable electronic device and a stationary electronic device, such as an image display device.

In response to increasing demand for diversified functions, the portable electronic device has been realized in the form of a multimedia player with multiple functions such as capturing a still image or a moving image of a photographic subject, reproducing a digital audio and video compression file, playing a game, receiving a broadcast and so on. In addition, the multiple functions are also applied to the stationary electronic device for user convenience.

In recent years, a variety of new attempts have been made to realize the multiple functions in hardware or in software. As one example, a user interface environment is provided in which a user performs voice recording or searches for and selects a voice file in an easy, convenient manner.

On the other hand, in recent years, a mobile terminal the front portion of which is equipped with a touch screen has appeared on the market. The touch screen provides a function of recognizing a fingerprint of a user's finger as well as a user's touch input. Accordingly, there is an increasing need for a variety of functions that can be executed using the recognized fingerprint of the user's finger.

### DISCLOSURE OF THE INVENTION

Therefore, an object of the present invention is to recognize a fingerprint of a user's finger and execute a variety of functions using the recognized fingerprint.

Another object of the present invention is to match different functions with fingerprints of different fingers and thus execute the different functions using the recognized fingerprints of the different fingers.

A further object of the present invention is to provide various methods of matching various pieces of information with fingerprints of different fingers and thus using the various pieces of information. US2010/231356 discloses an apparatus and method for implementing various different functions upon receipt of different fingerprint information via touch inputs. EP2226741 discloses an apparatus and method for providing different functions in response to different fingerprint inputs, and for unlocking a device upon receipt of multiple fingerprint inputs.

### Solution to problem

To achieve these and other advantages and in accordance with the purpose of the present invention, as embodied and broadly described herein, there is provided a mobile terminal according to claim 1, and a method according to claim 6.

In the mobile terminal, the function linked to the fingerprint of the finger may be a function of storing in a memory unit the information that is output to the region in which the fingerprint of the finger is recognized.

In the mobile terminal, when the storing of the effective information is completed, the controller outputs a graphic object indicating that the information is stored.

In the mobile terminal, if the fingerprint of the finger is again recognized after the storing of the information is completed, the controller may execute a function associated with at least one among the stored information and information that is output to the region in which the fingerprint of the finger is again recognized.

In the mobile terminal, based on user's selection, it may be determined which one of the stored information and the information that is output to the region in which the fingerprint of the finger is again recognized the function is executed with respect to, and if the fingerprint of the finger is again recognized, the graphic objects for selecting the functions, which correspond to the functions, respectively, may be output to the vicinity of the region in which the fingerprint of the finger is again recognized.

In the mobile terminal, the function associated with the stored information may be a function of outputting the stored information to the region in which the fingerprint of the finger is again recognized, and the function associated with the information that is output to the region in which the fingerprint of the finger is again recognized may be a function of storing in the memory unit the information that is output to the region in which the fingerprint of the finger is again recognized.

In the mobile terminal, pieces of matching information in which different functions are linked to the fingerprints of the different fingers may be stored in the memory unit, and if one among the fingerprints of the different fingers is recognized, the controller may execute the function matched to the recognized fingerprint of the one finger.

In the mobile terminal, a function of storing in the memory unit for a short time the information that is output to the region in which the fingerprint of the one finger is recognized may be matched to the fingerprint of the one finger among the fingerprints of the different fingers, and after the fingerprint of the one finger a touch of which is applied to one region of the display unit is recognized and the information that is output to the region in which the fingerprint of the one finger is recognized is stored, if the fingerprint of the one finger is again recognized, information that is output to the region in which the fingerprint of the one finger is again recognized may be additionally stored in the memory unit.

In the mobile terminal, multiple pieces of information may be stored in the memory unit, and if there is a request for outputting the multiple pieces of information, the controller may output on the display unit a list that includes items which corresponds to the multiple pieces of information, respectively, and may output to one region of the display unit at least one piece of information corresponding to the item that a user selects from the items that make up the list.

In the mobile terminal, the request for outputting the multiple pieces of information may be received based on application of the fingerprint of the finger, different from the fingerprint of the one finger.

In the mobile terminal, if touches of the multiple fingers are applied to the display unit, the fingerprint recognition unit may recognize the fingerprints of the multiple fingers the touches of which are applied, and the controller may execute the functions that are matched to the recognized fingerprints of the multiples fingers, respectively.

In the mobile terminal, the function linked to the fingerprint may be a function that is executed using person information, and the different pieces of person information may be set to correspond to the different fingers in such a manner that the person information that is set to correspond to the recognized fingerprint of the finger, among the different fingerprints, is used.

In the mobile terminal, an icon corresponding to a specific application may be output on the display unit, and if among the different fingers, the fingerprint of one finger the touch of which is applied to the icon is recognized, the controller may output a graphic object indicating the person information that is set to correspond to the recognized fingerprint of the one finger, to the vicinity of the region to which the icon is output.

In the mobile terminal, when the graphic object is selected, the controller may execute an application corresponding to the icon in such a manner as to execute a function that uses the person information that is set to correspond to the fingerprint of the finger, and when the icon is selected in a state where the graphic object is output, the controller may execute the specific application without using the person information.

In the mobile terminal, if the graphic object is selected and the application is a message transmitting application, the controller may transmit a message to an external device associated with the person information that is set to correspond to the recognized fingerprint of the finger or may transmit contact information relating to the person informing to the external selected by the user.

In the mobile terminal, if the application is an application that has a function of outputting an image, the controller may output at least one image associated with the person information, among multiple images stored in the memory unit, on the display unit, using the person information that is set to correspond to the fingerprint of the finger.

In the mobile terminal, multiple groups each of which includes at least one image may be stored in the memory unit, group images correspond to the multiple groups, respectively, may be output on the display unit, and when the fingerprint of the finger the touch of which is applied to a region to which one among the multiple group images is output is recognized, the controller may output at least one or more images, among images associated with the person information, which are set to correspond to the recognized fingerprint of the finger, to the vicinity of the one group image.

In the mobile terminal, the controller may change the image associated with the person information that is output to the vicinity of the one group image, based on the recognized fingerprint of the finger.

In the mobile terminal, when the recognition of the fingerprint of the finger fails and the touch of the finger is released from the display unit, the controller may select the group corresponding to the one group image and may output at least one or more images among the images included in the selected group, on the display unit.

In the mobile terminal, the fingerprint recognition unit may recognize the fingerprint of the finger the touch of which is applied, based on at least one, among a case in which the touch of the finger is applied for a predetermined time or more or a case in which the touch of the finger is applied to a predetermined area or more.

### Advantageous Effects of Invention

The executing of the fingerprint recognition function according to the touch type is described above. Accordingly, according to the embodiment of the present invention, the fingerprint recognition function is executed only when a specific touch is applied. This consumes less battery power than when the fingerprint recognition function is always executed in the background. In addition, according to the embodiment of the present invention, the touch for recognizing the fingerprint and the common touch are distinguished and thus the function that is executed by executing the fingerprint recognition function and the function that is executed by applying the common touch are better distinguished. This prevents unnecessary fingerprint recognition.

According to the present invention, when the touch of the finger is applied, the fingerprint of the finger the touch of which is applied is recognized, and the function linked to the recognized fingerprint is executed. Therefore, according to the embodiment of the present invention, the function linked to the fingerprint is immediately executed using only the fingerprint recognition, without a separate key operation.

In addition, according to the embodiment of the present invention, various functions are executed by matching the person information or the personal information with the fingerprint of the finger and thus by using the pieces of matching information.

### Brief Description of Drawings

FIG. 1 is a block diagram of a mobile terminal according to one embodiment of the present invention;
FIG. 2A and FIG. 2B are diagrams, each illustrating a telecommunication system in which the mobile terminal according to one embodiment of the present invention operates;
FIG. 3A is a diagram of the mobile terminal according to one embodiment of the present invention when viewed from front;
FIG. 3B is a diagram of the mobile terminal according to one embodiment of the present invention when viewed from rear;
FIG. 4 is a perspective diagram illustrating a fingerprint recognition sensor in the mobile terminal according to one embodiment of the present invention;
FIG. 5 is a flowchart illustrating a method of executing a function associated with a fingerprint recognized, using fingerprint recognition, in the mobile terminal according to one embodiment of the present invention;
FIGS. 6A(a) and 6A(b), 6B(a) to 6B(c), and 6C(a) to 6C(c) are diagrams for describing the control method in FIG. 5;
FIG. 7(a) to 7(d) are diagrams for describing a method of executing multiple functions in a case where the multiple functions are linked to the fingerprint of one finger;
FIGS. 8A(a) to 8A(c) and FIGS. 8B(a) to 8B(c) are diagrams illustrating execution of functions associated with the fingerprint recognized in a case where the fingerprints of the different fingers are recognized;
FIGS. 9(a) and 9(b) are diagrams illustrating a method in which in a case where the multiple touches are applied to the display unit, the functions that are linked to the fingerprints of the fingers the touches of which are applied, respectively, are executed;
FIG. 10 is a diagram illustrating that person information is set to correspond to each of the multiple fingers;
FIGS. 11A(a) to 11A(c), 11B(a) to 11B(d), and 11C(a) to 11C(c) are diagrams for describing a method in which the function linked to the fingerprint is executed using the person information that is set in FIG. 10;
FIGS. 12A(a) to 12A(c), 12B(a) and 12B(b), 12C(a) and 12C(b), and 12D(a) and 12D(b) are diagrams for describing the method in which the function linked to the fingerprint is executed using the person information that is set in FIG. 10;
FIGS. 13A(a) and 13A(b) and 13B(a) to 13B(c) are diagrams for describing the method in which the function linked to the fingerprint is executed using the person information that is set in FIG. 10;
FIGS. 14A(a) 14A(c), 14B(a) to 14B(c), and 14C(a) to 14C(c) are diagrams illustrating a method of using the personal information associated with security; and
FIGS. 15A(a) and 15A(b), 15B, and 15C are diagrams illustrating one example of a touch in which the fingerprint recognition is executed.

### Best Mode for Carrying out the Invention

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a mobile terminal according to the present invention will be explained in more detail with reference to the attached drawings. The suffixes attached to components of the wireless speaker, such as 'module' and 'unit or portion' were used for facilitation of the detailed description of the present invention. Therefore, the suffixes do not have different meanings from each other. In describing the present invention, if a detailed explanation for a related known function or construction is considered to unnecessarily divert the gist of the present invention, such explanation has been omitted but would be understood by those skilled in the art. The accompanying drawings of the present invention aim to facilitate understanding of the present invention and should not be construed as limited to the accompanying drawings. The technical idea of the present invention should be interpreted to embrace all such alterations, modifications, and variations in addition to the accompanying drawings.

The mobile terminal according to the present invention may include a smart phone, a laptop computer, a digital broadcasting terminal, a Personal Digital Assistant (PDA), a Portable Multimedia Player (PMP), a navigation system, a slate PC, a tablet PC, an ultra book, etc. However, it will be obvious to those skilled in the art that the present invention may be also applicable to a fixed terminal such as a digital TV and a desktop computer, except for specific configurations for mobility.

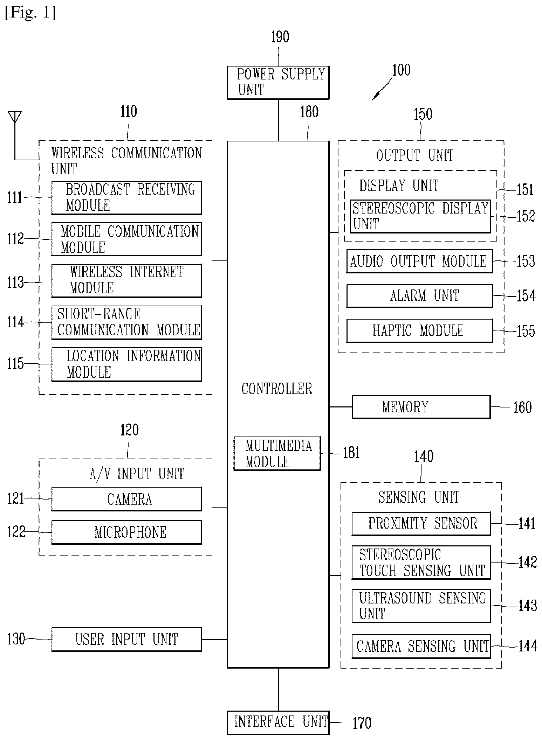

FIG. 1 is a block diagram of a mobile terminal according to an embodiment of the present invention.

As shown in FIG. 1, the mobile terminal 100 includes a radio communication unit 110, an A/V (Audio/Video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. The mobile terminal 100 may be implemented by greater or fewer components.

Hereinafter, each of the above components will be explained.

The radio communication unit 110 typically includes one or more components to authorize radio communication between the mobile terminal 100 and a radio communication unit system or a network in which the mobile terminal 100 is located. For example, the radio communication unit 110 may include a broadcast receiving module 111, a mobile communication module 112, a wireless Internet module 113, a short range communication module 114, a location information module 115, etc.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network. In this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO®), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The mobile communication module 112 is configured to implement a video call mode and a voice call mode. The video call mode indicates a call performed while a user views counterpart, whereas the voice call mode indicates a call performed while a user does not view counterpart. For implementation of the video call mode and the voice call mode, the mobile communication module 112 is configured to transmit and receive at least one of voice data and image data.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short range communication module 114 is a module for supporting short range communications. Some examples of short range communication technology include BluetoothTM, Radio Frequency IDentification (RFID), Infrared Data Association (IrDA), Ultra-WideBand (UWB), ZigBeeTM, Near Field Communication (NFC) and the like.

The location information module 115 is a module for acquiring a location (or position) of the mobile communication terminal. For example, the location information module 115 may include a GPS (Global Positioning System) module.

Referring to FIG. 1, the A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the radio communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of a user's touch (contact) with the mobile terminal 100 (e.g., touch inputs), the orientation of the mobile terminal 100, an acceleration or deceleration motion and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The output unit 150 is configured to provide outputs in a visual, audible, and/or tactile manner (e.g., audio signal, video signal, alarm signal, vibration signal, etc.). The output unit 150 may include the display unit 151, an audio output unit 153, an alarm unit 154, a haptic module 155, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of these displays may be configured to be transparent so that outside may be seen therethrough, which may be referred to as a transparent display. A representative example of this transparent display may include a transparent organic light emitting diode (TOLED), etc. The mobile terminal 100 may include two or more displays 151. The rear surface portion of the display unit 151 may also be implemented to be optically transparent. Under this configuration, a user can view an object positioned at a rear side of a body through a region occupied by the display unit 151 of the body.

The display unit 151 may be implemented in two or more in number according to a configured aspect of the mobile terminal 100. For instance, a plurality of displays may be arranged on one surface integrally or separately, or may be arranged on different surfaces.

The display unit 151 may also be implemented as a stereoscopic display unit 152 for displaying stereoscopic images.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit (not shown). The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area of a touch object, but also a touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera, a photo sensor, and a laser sensor.

For example, the camera and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the mobile terminal. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, the controller 180 may execute a lock state to restrict a user from inputting control commands for applications when a state of the mobile terminal meets a preset condition. Also, the controller 180 may control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a communication system which is operable with the mobile terminal 100 according to the present disclosure will be described.

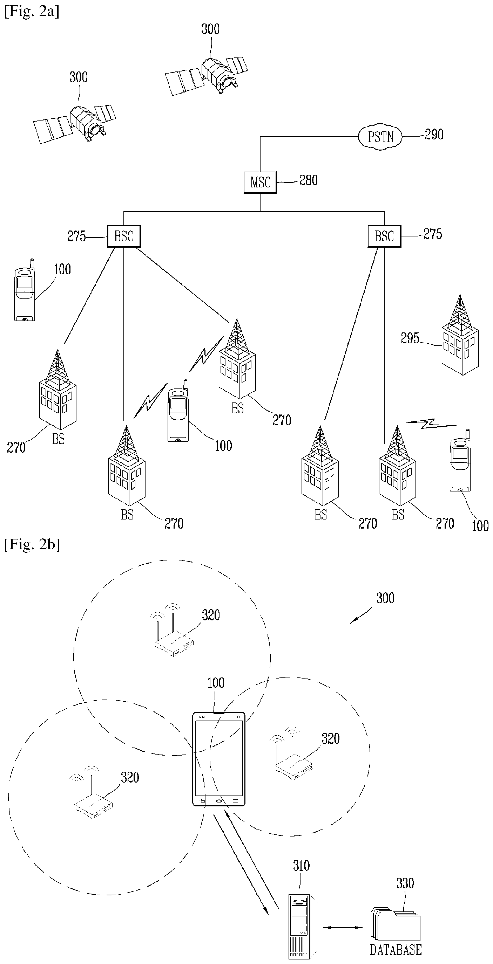

FIGS. 2A and 2B are conceptual views of a communication system operable with a mobile terminal 100 in accordance with the present disclosure.

First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminal s 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omnidirectional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminal s 100 operating within the system. The broadcast receiving module 111 (FIG. 1B) is typically configured inside the mobile terminal 100 to receive broadcast signals transmitted by the BT 295.

FIG. 2A further depicts several Global Positioning System (GPS) satellites 300. Such satellites 300 facilitate locating the position of at least one of plural mobile terminal s 100. Two satellites are depicted in FIG. 2, but it is understood that useful position information may be obtained with greater or fewer satellites than two satellites. The GPS module 115 (FIG. 1B) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminal s 100. The mobile terminal s 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminal s 100.

Hereinafter, description will be given of a method for acquiring location information of a mobile terminal using a wireless fidelity (WiFi) positioning system (WPS), with reference to FIG. 2B.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

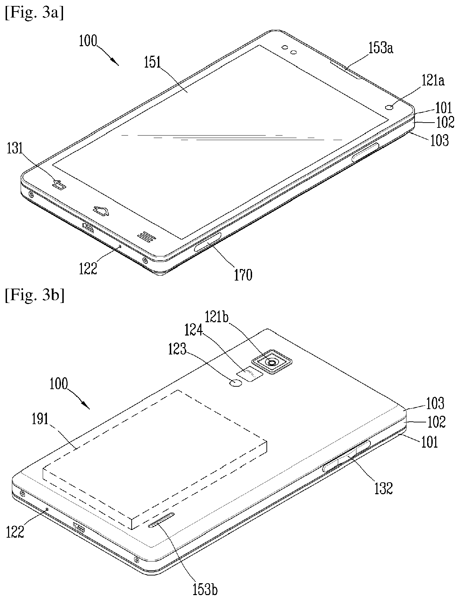

FIG. 3A is a front perspective view of the mobile terminal 100 according to an embodiment of the present invention.

The mobile terminal 100 according to the present invention is a bar type mobile terminal. However, the present invention is not limited to this, but may be applied to a watch type, a clip type, a glasses type, a folder type in which two or more bodies are coupled to each other so as to perform a relative motion, a swing type, a swivel type, etc.

A case (casing, housing, cover, etc.) forming an appearance of a terminal body may include a front case 101 and a rear case 102. Various components may be accommodated in a space formed by the front case 101 and the rear case 102. A cover 103 may be coupled to the front case 101 or the rear case 102 to thus form a rear appearance of the mobile terminal 100.

Such cases may be formed by injection-molded synthetic resin, or may be formed using a metallic material such as stainless steel (STS), titanium (Ti) and aluminum (Al).

A display unit 151, a first audio output unit 153a, a first camera 121a, a first user input unit 131, etc. may be formed on the front surface of the terminal body. A microphone 122, an interface unit 170, a second user input unit 132, etc. may be formed on the side surface of the terminal body.

The display unit 151 is configured to display (output) information processed by the mobile terminal 100. The display unit 151 may include a liquid crystal display (LCD) module, a thin film transistor-liquid crystal display (TFT LCD), an organic light-emitting diode (OLED), a flexible display, a three-dimensional (3D) display and an e-ink display.

The display unit 151 may include a touch sensing means for sensing content input in a touch manner. Once a region on the display unit 151 is touched, content corresponding to the touched region is input. Content input in a touch manner may be texts, or numbers, or menu items which can be instructed or set in each mode.

The touch sensing means may be formed to be transmissive so that the display unit 151 can be viewed, and may include a structure for enhancing visibility of the display unit 151 at a bright place. Referring to FIG. 1, the display unit 151 occupies most parts of the front surface of the front case 101.

The first audio output unit 153a and the first camera 121a are disposed at a region close to one end of the display unit 151, and the first user input unit 131 and the microphone 122 are disposed at a region close to another end of the display unit 151. The second user input unit 132 (refer to FIG. 2), an interface unit 170, etc. may be disposed on the side surface of the terminal body.

The first audio output unit 153a may be implemented as a receiver for transmitting a call sound to a user's ears, or a loud speaker for outputting each type of alarm sounds or a play sound of multimedia.

A sound generated from the first audio output unit 153a may be emitted along an assembly gap between structures. In this case, a hole for output of a sound may not be exposed to outside, and thus the appearance of the mobile terminal 100 may be simplified.

The first camera 121a processes image data of still pictures or video acquired by an image capture device in a video capturing mode or an image capturing mode. The processed image frames may be displayed on the display unit 151.

The user input unit 130 is manipulated to input a command for controlling the operation of the mobile terminal 100, and may include a first manipulation unit 131 and a second manipulation unit 132. The first manipulation unit 131 and the second manipulation unit 132 may be referred to as manipulating portions, and may include any type of ones that can be manipulated in a user's tactile manner such as touch, push and scroll.

In drawings, the first manipulation unit 131 is implemented as a touch key. However, the present invention is not limited to this. For instance, the first manipulation unit 131 may be implemented as a mechanical key, or combination of a touch key and a push key.

Content input by the first manipulation unit 131 and/or the second manipulation unit 132 may be set in various manners. For instance, the first manipulation unit 131 may be used to input commands such as menu, home, cancellation and search. And the second manipulation unit 132 may be used to input a command such as controlling a size of a sound output from the first audio output module 153a, or a command such as converting the current mode of the display unit 151 into a touch recognition mode.

The microphone 122 is configured to receive a user's voice, other sound, etc. The microphone 122 may be provided at a plurality of positions, and may be configured to receive a stereo sound.

The interface unit 170 may be generally implemented to interface the mobile terminal 100 with external devices. For example, the interface unit 170 may include at least one of a connection terminal for wired or wireless connection with an earphone, a port for short-range communication (e.g., Infrared ray port (IrDA Port), Bluetooth port, wireless LAN port, etc.), and a power supply terminal for supplying power to the mobile terminal 100. Such interface unit 170 may be implemented as a socket for accommodating therein an external card such as a Subscriber Identity Module (SIM), a User Identity Module (UIM), and a memory card for information storage.

FIG. 3B is a rear perspective view of the mobile terminal 100 of FIG. 1.

Referring to FIG. 3B, a second camera 121b may be additionally mounted to the rear surface of the terminal body, i.e., the rear case 102. The second camera 121b faces a direction which is opposite to a direction faced by the first camera 121a (refer to FIG. 1), and may have pixels different from those of the first camera 121a.

For example, the first camera 121a may operate with relatively lower pixels (lower resolution). Thus, the first camera 121a may be useful when a user can capture his or her face and send it to a calling party in a video call mode or the like. On the other hand, the second camera 121b may operate with a relatively higher pixels (higher resolution) such that it can be useful for a user to obtain higher quality pictures for later use. The first camera 121a and the second camera 121b may be installed at the terminal body so as to rotate or pop-up.

A flash 123 and a mirror 124 may be additionally disposed close to the second camera 121b. When capturing an object by using the second camera 121b, the flash 123 provides light to the object. The mirror 124 can cooperate with the second camera 121b to allow a user to photograph himself or herself in a self-portrait mode.

A second audio output unit 153b may be additionally disposed on the rear surface of the terminal body. The second audio output module 153b may implement a stereo function together with the first audio output module 153a (refer to FIG. 3A), and may be used for calling in a speaker phone mode.

A broadcast signal receiving antenna (not shown) as well as an antenna for calling may be additionally disposed on the side surface of the terminal body. An antenna, part of the broadcast receiving module 111 (refer to FIG. 1) may be installed to be retractable into the terminal body.

The power supply unit 190 (refer to FIG. 1) for supplying power to the mobile terminal 100 is mounted to the terminal body. The power supply unit 190 may include a battery 191 mounted in the terminal body or detachably mounted to the terminal body. In the drawings, the battery cover 103 is coupled to the rear case 102 so as to cover the battery 191, thereby preventing separation of the battery 191 and protecting the battery 191 from external impacts or foreign materials.

In addition, the mobile terminal according to one embodiment of the present invention, which is capable of including at least one or more among the constituent elements as described above, further includes a display unit in which fingerprint recognition is possible.

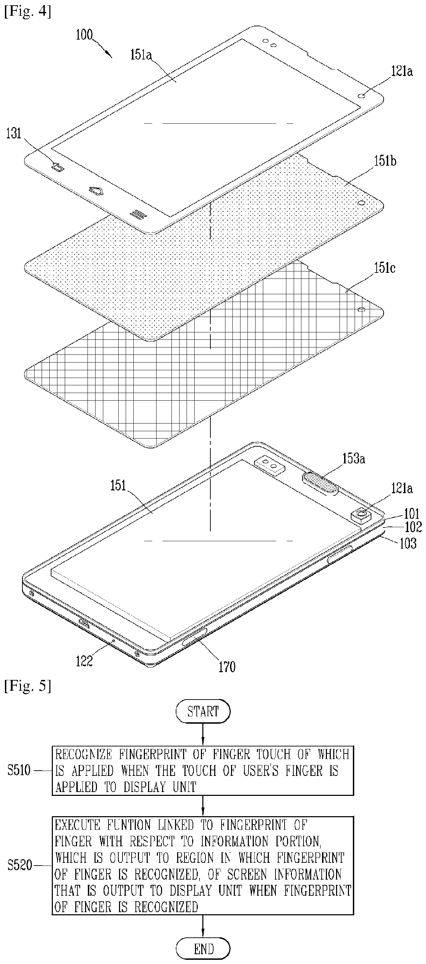

According to one embodiment of the present invention, referring to FIG. 4, the display unit 151 that is capable of the fingerprint recognition is configured to have a layered structure that includes three layers, that is, a glass substrate 151a, a touch sensor 151b that senses a touch, and a fingerprint recognition sensor 151c for fingerprint recognition. At this point, as illustrated in FIG. 4, the glass substrate 151a, the touch sensor 151b, and the fingerprint recognition sensor 151c are positioned relative to one another from the top. In addition, positions of the touch sensor 151b and the fingerprint recognition sensor 151c may be exchanged relative to each other.

The touch sensor 151b, as described above, senses the touch that is applied to the display unit 151. In addition, the glass substrate 151a has light transmissivity, and screen information that is output to the display unit 151 is made visible to a user through the glass substrate 151a.

The fingerprint recognition sensor includes sensors, such as an optical sensor, a semiconductor device sensor, an ultrasonic wave sensor, a heat detection sensor, and a noncontact sensor. The optical sensor is a type that uses light reflection. In addition, the semiconductor device sensor is a type that uses electrical conductivity characteristics of a skin. When a contact touch or a proximity touch is applied to the display unit 151, the fingerprint recognition sensor recognizes a fingerprint that results from applying the touch.

According to one embodiment of the present invention, the fingerprint recognition sensor is the optical sensor. The fingerprint recognition sensor 151c adjusts a resolution by adjusting an amount of light. For example, if control is performed in such a manner that a large amount of light passes through the fingerprint recognition sensor 151c, the display unit 151 has a high resolution. Conversely, if the control is performed in such a manner that a small amount of light passes through the fingerprint recognition sensor 151, the display unit 151 has a low resolution.

At this point, the controller 180 adjusts the resolution using the fingerprint recognition sensor 151c and thus controls the extent to which the fingerprint of the user's finger pressed against the display unit 151, is recognized. For example, the display unit 151 is adjusted to a high resolution in order to increase recognizability of the fingerprint.

At this point, if the display unit 151 is at a high resolution, the fingerprint image increases in clearness. In addition, if the display unit 151 is at a low resolution, the fingerprint image decreases in clearness. The higher the clearness of the fingerprint image, the higher the recognizability of the fingerprint, and the lower the clearness of the fingerprint image, the lower the recognizability of the fingerprint.

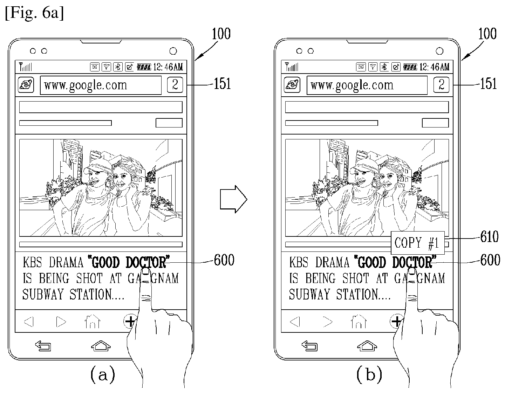

Various methods of using the fingerprint recognition in the mobile terminal according to one embodiment of the present invention is described below. FIG. 5 is a flowchart illustrating a method of executing a function linked to the recognized fingerprint using the fingerprint recognition. FIGS. 6A(a) and 6A(b), 6B(a) to 6B(c), and 6C(a) to 6C(c) are diagrams for describing the control method in FIG. 5.

When a touch of the user's finger is applied to the display unit, the mobile terminal that is capable of the fingerprint recognition, according to one embodiment of the present invention, proceeds with a step of recognizing the fingerprint of the finger the touch of which is applied (S510).

The mobile terminal according to one embodiment of the present invention may further include a fingerprint recognition unit (not illustrated) that recognizes the fingerprint of the finger the touch of which is applied to the display unit 151. At this point, in order to recognize the fingerprint, the mobile terminal according to one embodiment of the present invention executes a fingerprint recognition function (or activates the fingerprint recognition function). The fingerprint recognition function is always executed in the background or is executed when a specific condition is satisfied, in a manner that always recognizes the fingerprint of the finger the touch of which is applied to the display unit 151.

If the fingerprint recognition function is executed in the background, the fingerprint recognition unit recognizes the fingerprint that results from the touches applied to the display unit 151. On the other hand, if the fingerprint recognition function is executed based on a user's request, the fingerprint recognition unit recognizes the fingerprint that results from applying the touch to the display unit 151 only in a state where the fingerprint recognition function is executed. It is determined whether the fingerprint recognition function is executed in the background or when the specific condition is satisfied, based on a user's selection.

In a state where the fingerprint recognition function is activated, the fingerprint is recognized based on the application of the touch of the user's finger to the display unit 151. At this point, the touch of the user's finger applied to the display unit 151 includes both a "contact touch" and a "proximity touch."

In addition, if the fingerprint recognition function is executed, the controller 180 recognizes the fingerprint that results from applying all touches regardless of types of touches or recognizes the fingerprint that results from applying only a predetermined-type touch.

If the fingerprint that results from applying the predetermined-type touch is to be recognized, the controller 180 does not recognize the fingerprint that results from applying the touch that is not the predetermined-type touch. At this point, the predetermined-type touch includes many types of touches, such as a touch that is applied for a predetermined time or more and a touch that is applied to a predetermined area or more.

If the predetermined-type touch is applied and thus the fingerprint recognition function is executed, a graphic object indicating that the recognition of the fingerprint of the finger the touch of which is applied is in progress is output to one region of the display unit 151. At this point, the graphic object 660 is output to one region of the display unit 151. For example, the graphic object 660 is output to a status display region on which a status of the mobile terminal is displayed.

As another example, if the touch is applied for a predetermined time or more, the controller 180 outputs to the middle of the display unit 151 the graphic object 660 indicating that the fingerprint recognition is in progress. Accordingly, the mobile terminal according to the embodiment of the present invention alerts the user that the recognition of the fingerprint of his/her finger is in progress and additionally guides the user in order to prevent him/her from releasing the touch until the fingerprint of his/her finger is recognized.

When the touch applied to the display unit 151 is released from the display unit 151 in a state where the graphic object is output, the controller 180 no longer recognizes the fingerprint of the finger the touch of which is applied. In this case, the controller 180 executes a function that would be originally executed with the touch that results in failure of the recognition of the fingerprint, independently of a function that would be executed with the fingerprint recognition.

The fingerprint recognition to be described below includes the various types of fingerprint recognition described above, such as the recognition of the fingerprint that results from applying all the touches to the display unit and the recognition of the fingerprint that results from applying only the predetermined-type touch.

On the other hand, the fingerprint recognition unit is configured to include a detection unit that detects the fingerprint of the finger the touch of which is applied and an authentication unit that determines whether the fingerprint of the finger the touch of which is detected is appropriate. For example, when the user's touch is detected, the detection unit detects the fingerprint of the finger the touch of which is detected. In addition, the authentication unit receives information on the fingerprint of the finger the touch of which is detected and determines whether the information on the fingerprint of the finger the touch of which is detected is appropriate.

When the fingerprint of the finger the touch of which is detected is recognized, the mobile terminal according to one embodiment of the present invention proceeds with a step of executing a function linked to the fingerprint with respect to an information portion that is output to a region in which the fingerprint of the finger is recognized, of the screen information that is output to the display unit (S520).

The screen information that is output to the display unit 151 varies according to operation of the mobile terminal. For example, when a web browser application is executed on the mobile terminal, execution screen information resulting from the web browser application is output to the display unit 151. As another example, when an application associated with a message is executed on the mobile terminal, the execution screen information resulting from the application associated with the message is output to the display unit 151.

When the fingerprint is recognized, the controller 180 determines whether the fingerprint is matched with a fingerprint that is pre-stored in the memory unit 160. More specifically, the controller 180 extracts at least one, among a position of and an attribute of a distinctive portion of an image of the fingerprint that is recognized using the fingerprint recognition unit, compares the extracted one with the fingerprint pre-stored in the memory unit 160, and determines whether the recognized fingerprint is consistent with the pre-stored fingerprint.

Thereafter, the fingerprint is consistent with the pre-stored fingerprint, the controller 180 executes the function linked to the fingerprint with respect to information that is output to the region in which the fingerprint is recognized. The function linked to the fingerprint may be matched, in advance, with the fingerprint, and may be linked to the fingerprint through the user's selection.

At this point, the function linked to the fingerprint is executed immediately when the fingerprint is recognized. In addition, after the fingerprint is recognized, the function linked to the fingerprint is executed by outputting the graphic object indicating the function linked to the fingerprint and applying the touch to the graphic object. In order to alert the user to the function linked to the fingerprint, the graphic object is output to the vicinity of the region in which the fingerprint is recognized.

Matching information on a function that is made in advance to correspond to a fingerprint of each finger is included in the memory unit 160. At this point, the function corresponding to the fingerprint of the finger is set by the user or is pre-set. For example, the matching information in which a function of storing arbitrary screen information in (or a function of copying the arbitrary screen information into) the memory unit 160 for a short time (or temporarily) is matched with a forefinger is stored in the memory unit 160. The function of storing the arbitrary information in the memory unit 160 for a short time means a function in which the arbitrary information is stored in the memory unit 160 only for a predetermined time, or is stored in a state where the mobile terminal is powered off or is deleted from the memory unit 160 in a state where the mobile terminal is powered off. At this point, the memory unit 160 is a flash memory, a RAM, or the like in which the information is stored for a short time.

More specifically, according to the control method in FIG. 5, the web browser application is executed on the mobile terminal as illustrated in FIG. 6A(a). In this case, the execution screen information resulting from the web browser application is output to the display unit 151. At this point, the execution screen information includes as least one, among text and an image.

When the touch of the finger is applied to the finger touch, the controller 180 recognizes the fingerprint of the finger the touch of which is applied. For example, as illustrated in FIG. 6A(a), the controller 180 recognizes the fingerprint of the finger the
touch of which is applied to one region 600 of the execution screen information.

At this point, although not illustrated, if the recognition of the fingerprint of the finger is in progress, the controller 180 outputs the graphic object alerting the user that the fingerprint of the finger the touch of which is applied to one region of the display unit 151 is recognized.

In addition, as illustrated above, the touch of the finger the fingerprint of which is recognized is one among all the touches that are applied to the display unit 151 or is a predetermined-type touch. For example, the controller 180 recognizes the fingerprint, based on the touch being applied for a predetermined time or more.

When the fingerprint is recognized, the controller 180 executes the function linked to the fingerprint of the finger with respect to the screen information that is output to the region in which the fingerprint of the finger is recognized. For example, the function linked to the fingerprint of the finger is the copying function. At this point, as illustrated in FIG. 6A(b), the controller 180 executes the copying function, the function linked to the fingerprint, with respect to the text information 600 that is output to the region in which the fingerprint is recognized.

In addition, the controller 180 executes graphic object 610 indicating that the function linked to the fingerprint is executed. For example, as illustrated in FIG. 6A(b), the controller 180 outputs the graphic object 610 indicating that the copying function is executed. At this point, in order to easily alert the user that the function is executed, the controller 180 outputs the graphic object to the vicinity of the region in which the fingerprint is recognized.

In addition, as described above, the fingerprint of the finger is recognized, the controller 180 outputs the graphic object indicating the function linked to the fingerprint of the finger without immediately executing the function linked to the fingerprint of the finger. At this point, the controller 180 executes the function linked to the fingerprint of the finger by applying the touch to the graphic object indicating the function linked to the fingerprint of the finger.

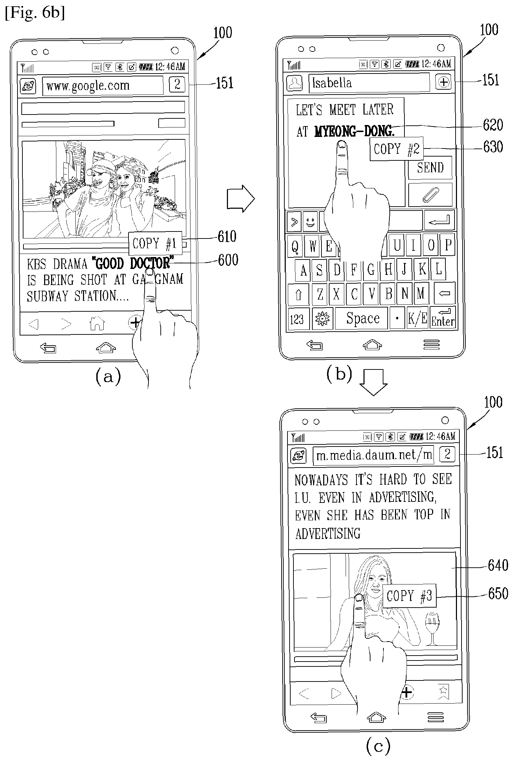

On the other hand, the controller 180 recognizes the fingerprint of the same finger a given number of times and when the fingerprint is recognized the given number of times, executes the same function the given number of times. That is, the controller 180 executes the function linked to the fingerprint and then again recognizes the same fingerprint as the previously recognized fingerprint of the finger. At this point, the controller 180 again executes the function linked to the fingerprint. For example, as illustrated in FIG. 6(b), the controller 180 executes the function linked to the fingerprint (for example, the copying function) and then recognized the same fingerprint as the previously-recognized fingerprint.

At this point, the controller 180 again executes the function linked to the fingerprint
with respect to screen information 620 that is output in which the same fingerprint as the previously recognized fingerprint is again recognized. For example, the controller 180 stores the screen information 620, which is output to the region in which the fingerprint is again recognized, in the memory unit 160 for a short time. At this point, the screen information 620 that is output to the region in which the finger is again recognized is additionally stored in the memory unit 160 or the previously stored screen information is deleted and then only the screen information that is output to the region in which the fingerprint is again recognized is stored.

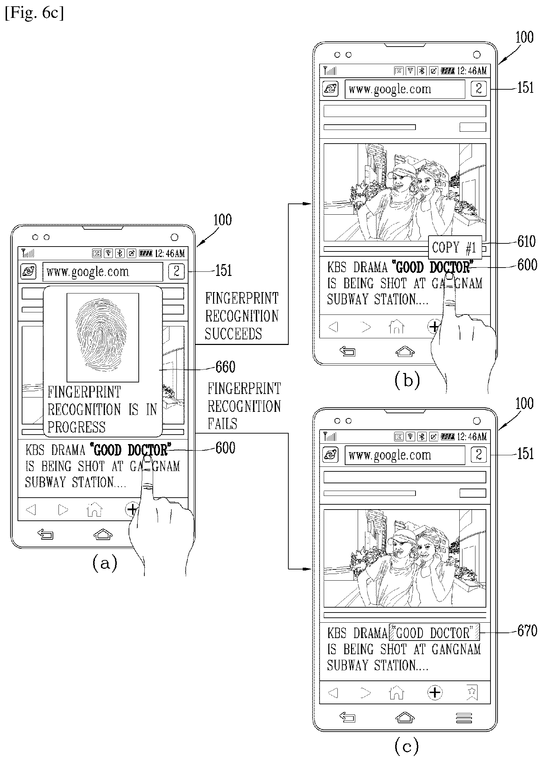

When the fingerprint is again recognized and the function linked to the fingerprint is again executed, the controller 180 outputs a graphic object 630 alerting the user that the function linked to the fingerprint is again executed. At this point, in order to indicate that the function is again linked to the fingerprint has an exterior appearance visually different from the graphic object that is previously displayed. For example, as illustrated in FIG. 6B(b), the graphic object 630 indicates that the copying function is executed the second time. In addition, unlike in FIGS. 6B(a) to 6B(b), when a fingerprint of the finger touch of which is applied to an image 640, which is the recognized fingerprint of the same finger is recognized, the same function is again performed and a graphic object 650 indicating that the same function is again executed is output as illustrated in FIG. 6(c).

On the other hand, although not illustrated, if the information that is output to the region in which the fingerprint is recognized is such that the function linked to the fingerprint can be executed, the controller 180 does not execute the function linked to the fingerprint. For example, if the region in which the fingerprint is recognized is an empty region in which the copying function cannot be executed, the controller 180 does not execute the copying function.

Only one function is linked to the fingerprint of the finger or multiple functions are linked to the fingerprint of the finger. In this case, the controller 180 executes only one among the multiple functions.

The controller 180 executes the different functions according to the fingers the fingerprint of which are recognized. At this point, pieces of matching information in which different functions are matched with the fingerprints of different fingers, respectively, are stored in the memory unit 160. For example, the matching information in which a copying function of storing information in the memory unit 160 for a short time is matched with a fingerprint of a first finger among the multiple fingers, and the matching information in which a function of outputting information stored in the memory unit 160 to one region of the display unit 160 is matched with a fingerprint of a second finger different from the first finger among the multiple fingers are stored in the memory unit 160.

Setting information in which information necessary to execute the function linked to the fingerprint is set to correspond to the fingerprint of the finger is additionally stored in the memory unit 160. For example, if the function linked to the fingerprint is a function that is executed using person information, the matching information in which the personal information is set to correspond to the fingerprint of the finger is stored in the memory unit 160.

At this point, the person information that is set to correspond to the fingerprint is setting through the user's selection or according to a predetermined condition. The predetermined condition is a condition for the number of times that the person information is used. For example, based on whether or not the person information is frequently used, the user can set the frequently used person information to correspond to the fingerprint of the finger.

In addition, when the fingerprint of the finger is recognized, the controller 180 outputs to one region of the display unit a graphic object associated with the information that is set to correspond to the fingerprint.

The graphic object associated with the information that is set to correspond to the fingerprint is output immediately when the fingerprint is recognized. At this point, the controller 180 executes the function linked to the fingerprint immediately when the fingerprint is recognized. In addition, after the fingerprint is recognized, the controller 180 executes the function linked to the fingerprint, based on the second-time application of the touch input to the graphic object associated with the information that is set to correspond to the fingerprint.

In addition, the graphic object associated with the information that is set is output to the vicinity of the region in which the fingerprint is recognized or outputs to a status indication bar to which the information relating to the status of the mobile terminal is output. Accordingly, the mobile terminal according to the embodiment of the present invention alerts the user that the fingerprint is recognized or alerts the user that the function linked to the fingerprint is executed.

On the other hand, if the fingerprint fails to be consistent with the fingerprint stored in the memory unit 160, the controller 180 determines that the fingerprint recognition fails. At this point, the controller 180 may not execute the function linked to the fingerprint.

At this point, if the function that would be executed by the touch is present in the region in which the fingerprint recognition fails, regardless of the function linked to the fingerprint, the controller 180 executes the function that would be executed by the touch that is applied to the display unit 151.

For example, as illustrated in FIG. 6C(a), the fingerprint recognized is in progress, the controller 180 outputs a graphic object 660 indicating that the fingerprint is recognized. For example, the graphic object 660 is output in a manner that is superimposed onto the display unit 151 in order to alert the user that the fingerprint recognition is in progress and thus to prevent the user from releasing from the display unit 151 the touch of the fingerprint the recognition of which is in progress.

At this point, if the fingerprint recognition succeeds, the controller 180 executes the function linked to the fingerprint with respect to the screen information that is output to the region in which the fingerprint is recognized. For example, as illustrated in FIG. 6C(b), the controller 180 executes the copying function linked to the fingerprint.

At this point, if the fingerprint recognition fails, the controller 180 does not execute the function linked to the fingerprint with respect to the screen information that is output to the region in which the fingerprint is recognized. At this point, the controller 180 executes the function that would be executed by the touch with respect to the screen information that is output to the region in which the fingerprint is recognized. For example, as illustrated in FIG. 6C(c), the screen information is selected that is output to the region in which the fingerprint is recognized.

As another example, if an icon corresponding to a specific application is output to the display unit 151 and the recognition of the fingerprint of the finger applied to the region to which the icon is output fails, regardless of the fingerprint recognition, the display unit 151 executes the specific application, based on the touch applied to the icon.

The method is described above in which if the finger touch is applied to the display unit, the fingerprint of the finger the touch of which is applied is recognized and the function linked to the fingerprint is executed with respect to the screen information that is output to the region in which the fingerprint is recognized. The mobile terminal according to the embodiment of the present invention easily executes the function linked to the recognized fingerprint. In addition, the mobile terminal according to the embodiment of the present invention provides a function that can be executed by the user whose fingerprint is recognized, using the fingerprint recognition.

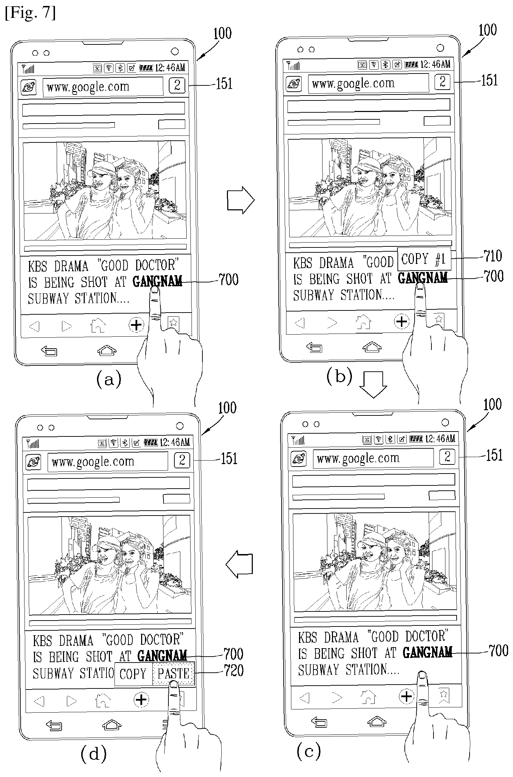

A method of executing the multiple functions in a case where the multiple functions are linked to the fingerprint of one finger is described below. FIG. 7(a) to 7(d) are diagrams for describing the method of executing the multiple functions in the case where the multiple functions are linked to the fingerprint of one finger.

At least one function is matched with the fingerprint of the finger. For example, the function of storing the screen information in (or the function of copying the screen information into) the memory unit 160 for a short time and the function of outputting (or a function of pasting) to one region of the display unit 151 the screen information stored in the memory unit 160 for a short time are matched with the fingerprint of the first finger.

In a state where at least two functions are matched with the fingerprint of the finger, if the fingerprint of the finger is recognized, the controller 180 executes one among the at least two functions.

In order to execute one among the at least two functions, the controller 180 executes one among the at least two functions, based on the user's selection or executes different functions according to the type of the screen information that is output to the region in which the fingerprint is recognized.

According to one embodiment of the present invention, if one among the at least two functions is to be executed based on the user's selection, the controller 180 outputs to one region of the display unit 151 graphic objects 720 that corresponds to the matched functions, respectively, in order for the user to select any one from among the at least two functions. For example, as illustrated in FIGS. 7(c) and 7(d), if the fingerprint of the finger is recognized, the controller 180 outputs the graphic objects 720 that correspond to the at least two functions matched with the finger, respectively, to the vicinity of the region in which the fingerprint is recognized.

After outputting the graphic objects, when the touch is applied to any of the graphic objects, the controller 180 executes the function that corresponds to a region to which the touch is applied. For example, as illustrated in FIG. 7(d), the copying function and the pasting function correspond to the graphic objects 720, respectively. At this point, when the touch is applied to the graphic object corresponding to the pasting function, of the graphic objects, the controller 180 executes the pasting function.

As another example, the controller 180 executes different functions according to the screen information that is output to the region in which the fingerprint is recognized. At this point, effective information is output to the region in which the fingerprint is recognized, or the region in which the fingerprint is recognized is an empty region to which the effective information is not output. The effective information is at least one portion such as the text, the image, and the like, of the screen information that is output to the display unit 151 on which the function linked to the fingerprint is executed.

At this point, the controller 180 executes one among the multiple functions linked to the recognized fingerprint, based on whether or not the effective information is output to the region in which the fingerprint is recognized. For example, if the multiple functions are the copying function and the pasting function, when the effective information is output to the region in which the fingerprint is recognized, the controller 180 outputs the copying function. And when the region in which the fingerprint is recognized is an empty region, the controller 180 executes the pasting function.

The method of executing the multiple functions in the case where the multiple functions are linked to one fingerprint is described above. Accordingly, the mobile terminal according to the embodiment of the present invention provides the multiple functions using one fingerprint.

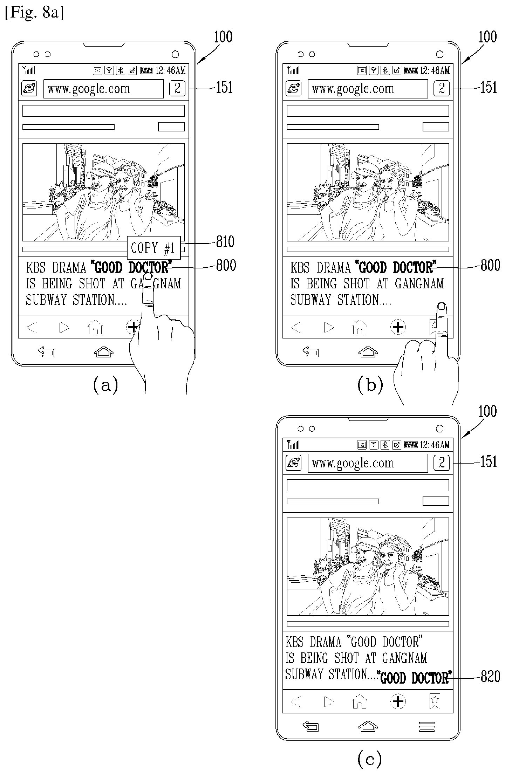

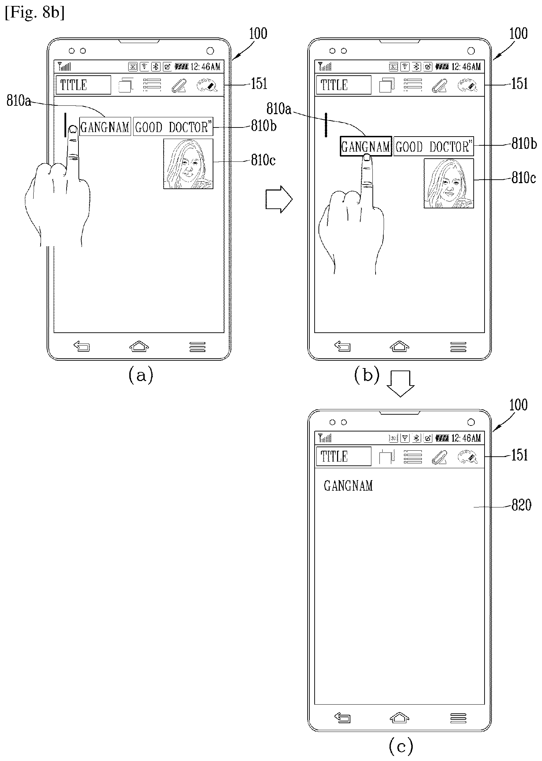

A method is described below in which in a case where different functions are matched with fingerprints of different fingers, based on which of the fingerprints of the different fingers is recognized, a function linked to the recognized fingerprint is executed. FIGS. 8A(a) to 8A(c) and FIGS. 8B(a) to 8B(c) are diagrams illustrating execution of functions associated with a fingerprint recognized in a case where the fingerprints of the different fingers are recognized.

Pieces of matching information in which different functions are matched with the fingerprints of different fingers are stored in the memory unit 160, respectively, are stored in the memory unit 160. At this point, when the fingerprints of the different fingers are recognized, the controller 180 executes the different functions using the pieces of matching information.

For example, the matching information in which a first function (for example, the copying function) is matched with the fingerprint of a first finger and a second function (for example, the pasting function) different from the first function is matched with a finger different from the first finger is stored in the memory unit 180. At this point, the different functions are set to be matched with the fingerprints of the different fingers, based on the user's selection, or in a predetermined manner.

When the touch is applied to the display unit 151, the controller 180 recognizes the fingerprint and determines which of the fingerprints of the fingers is recognized. When it is determined which of the fingerprints of the fingers is recognized, the controller 180 executes a function linked to the recognized fingerprint. That is, the controller 180 executes different functions according to the recognized fingerprint. In this manner, the mobile terminal according to the embodiment of the present invention uses fingerprint differences among the fingers.

In addition, the controller 180 does not execute a function linked to the fingerprint immediately after determining the fingerprint of the finger. When it is determined which of the fingerprints of the fingers is recognized, the controller 180 outputs a graphic object indicating the function linked to the recognized fingerprint of the finger. In this case, the controller 180 executes the function linked to the fingerprint of the finger by applying the touch to the graphic object.

For example, as illustrated in FIG. 8A(b), when the fingerprint of the first finger the touch of which is applied to the display unit 151, the controller 180 executes the function of storing for a short time in the memory unit 160 (or the function of copying for a short time into the memory unit 160) the screen information that is output to the region in which the fingerprint is recognized. In addition, as illustrated in FIG. 8A(b) and 8A(b), the fingerprint of the second finger different from the first finger, which results from applying the touch to the display unit 151, the controller 180 executes the function of outputting (or the function of pasting) the information being stored in the memory unit 160 to the region in which the fingerprint is recognized.

On the other hand, multiple pieces of information are stored in the memory unit 160. In addition, the function of outputting (or the function of pasting) one piece of information 820 among the multiple pieces of information stored in the memory unit 160 is linked to the fingerprint recognized in the controller 180. In this manner, if the multiple pieces of information are stored in the memory unit 160, the controller 180 provides a user environment in which the stored multiple piece of information can be recognized by his/her. For example, a list that includes the multiple pieces of information is output to the vicinity of the region in which the fingerprint is recognized. The list includes items 810a, 810b, and 810c that correspond to the multiple pieces of information, respectively. Accordingly, the user can easily grasp what pieces of information are stored in the memory unit 160.

For example, as illustrated in FIG. 8B(a), if the fingerprint to which the pasting function is linked is recognized, the controller 180 outputs the list that includes the items 810a, 810b, and 810c that correspond to multiple pieces of information, respectively, to the vicinity of the region in which the fingerprint is recognized.

At this point, based on a touch applied to at least one item 810a among the items 810a, 810b, and 810c that make up the list and that correspond to the multiple pieces of information, respectively, the controller 180 executes the function linked to the recognized fingerprint with respect to the information corresponding to the item 810a to which the touch is applied. For example, as illustrated in FIG. 8B(b), when the touch is applied to one item list 810a among the multiple items 810a, 810b, and 810c that make up the list and that correspond to the multiple pieces of information, respectively, the controller 180 outputs the information corresponding to the item 810a to the region in which the fingerprint is recognized.

The method of executing the different functions in the case where the different functions are linked to the fingerprints of the different fingers is described above. Accordingly, the user can execute the different functions using the fingerprints of the different fingers.

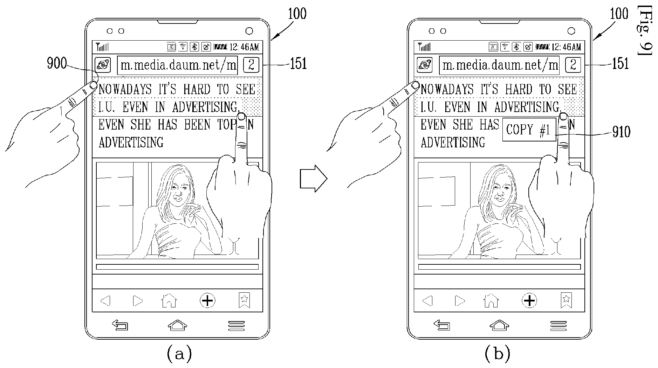

A method is described below in which in a case where the multiple different touches are applied to the display unit, the fingerprints of the fingers the touches of which are applied are recognized and the functions that are linked to the fingerprints, respectively, are executed. FIGS. 9(a) and 9(b) are diagrams illustrating the method in which in the case where the multiple touches are applied to the display unit, the functions that are linked to the fingerprints of the fingers the touches of which are applied, respectively, are executed.

The controller 180 detects the application of the multiple touches to the display unit 151. That is, the controller 180 detects the application of the multiple touches to different regions of the display unit 151. The multiple touches may be defined as a multiple-touch.

When the multiple touches are applied, the controller 180 recognizes the fingerprints of the multiple fingers of the multiple touches of which are applied. The multiple fingerprints of the multiple fingers are recognized at the same time or sequentially.

The controller 180 executes the functions that are linked to the fingerprints of the multiple fingers, respectively. At this point the different functions among which there is no relationship are linked to the multiple fingerprints of the multiple fingers. According to one embodiment of the present invention, among the multiple fingers, the first function is linked to the fingerprint of the first finger and the second function is linked to the fingerprint of the second finger different from the first finger. At this point, the controller 180 executes the first function with respect to the information that is output to the region in which the fingerprint of the first finger is recognized and executes the second function with respect to the information that is output to the region in which the fingerprint of the second finger is recognized.

When the fingerprints of the multiple fingers are recognized, the controller 180 immediately executes the functions linked to the fingerprints of the multiple fingers or outputs the graphic objects that correspond to the functions linked to the fingerprints of the multiple fingers, respectively.

For example, the controller 180 immediately executes the functions linked to the fingerprints of the multiple fingers. At this point, the controller 180 executes the functions linked to the fingerprints of the multiple fingers at the same time or sequentially. In addition, the controller 180 executes one function linked to the fingerprints of the multiple fingers.

If the multiple functions are sequentially executed, it is arbitrarily set which function is first executed, or according to predetermined order of priority it is determined which function is first executed. At this point, the predetermined order of priority is set based on a type of function that is linked to the fingerprint. For example, the function linked to the fingerprint of the first finger is a function of selecting information that is output to the region in which the fingerprint of the first finger is recognized, and the function linked to the fingerprint of the second finger different than the first finger is a function of storing information selected with the first finger in the memory unit 160. In this case, if the fingerprints of the first finger and the second finger are recognized, the function linked to the first finger is set to have priority.

As another example, when the fingerprints of the multiple fingers are recognized, the controller 180 outputs the graphic objects indicating the functions linked to the fingerprints of the multiple fingers, respectively. At this point, in order to alert the user to the functions that are linked to the fingerprints of the multiple fingers, respectively, the graphic object is output to the vicinity of each of the regions in which the fingerprints of the multiple fingers are recognized, respectively. For example, if among the multiple fingers, the first function is linked to the fingerprint of the first finger and the second function is linked to the fingerprint of the second finger different from the fingerprint of the first finger, the controller 180 outputs a graphic object indicating the first function to the vicinity of the region in which the fingerprint of the first finger is recognized and outputs a graphic object indicating the second function to the vicinity of the region in which the fingerprint of the second finger is recognized.

In this case, the controller 180 executes the functions linked to the fingerprints of the multiple fingers sequentially according to the order in which the graphic objects are selected.

In addition, even though the different functions are linked to the fingerprints of the multiple fingers, respectively, one function may be linked to the fingerprints of the multiple fingers. At this point, the controller 180 executes one function linked to the fingerprints of the multiple fingers. For example, a function of storing in the memory unit 160 the screen information that is output to a region ranging from the region in which the fingerprint of the first finger is recognized to the region in which the fingerprint of the second finger is recognized is linked to the fingerprint of the first finger and the fingerprint of the second finger different from the first finger, among the multiple fingers. According to one embodiment, as illustrated in FIGS. 9(a) and 9(b), when the fingerprints of the first finger and the second finger are recognized, the controller 180 stores in the memory unit 160 screen information 900 that is output to the region ranging from the region in which the fingerprint of the first finger is recognized to the region in which the fingerprint of the second finger is recognized.

The method is described above in which when the multiple touches are applied to the display unit, the fingerprints corresponding to the multiple touches, respectively, are recognized, and the functions that are linked to the multiple fingerprints, respectively, are executed. Accordingly, according to the embodiment of the present invention, the method is described in which if the multiple touches are applied, the multiple functions are executed. In addition, the user can execute more various functions using the multiple touches.

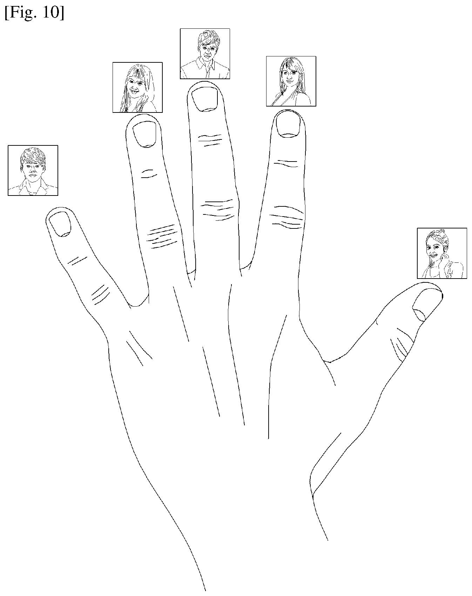

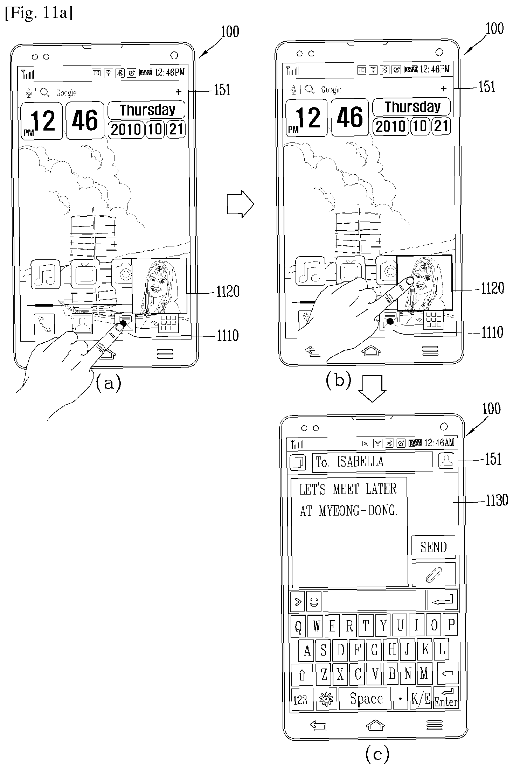

A method is described below in which if the function linked to the fingerprint is a function that is executed using the person information, such a function is executed. FIG. 10 is a diagram illustrating that the person information is set to correspond to each of the multiple fingers. FIGS. 11A(a) to 11A(c), 11B(a) to 11B(d), 11C(a) to 11C(c), 12A(a) to 12A(c), 12B(a) and 12B(b), 12C(a) and 12C(b), and 12D(a) and 12D(b) are diagrams for describing the method in which the function linked to the fingerprint is executed using the person information that is set in FIG. 10.

The controller 180 links the function to the fingerprint of the user's finger. At this point, the function linked to the fingerprint of the finger is a function that is executed using the person information. At this point, in order to execute the function linked to the fingerprint of the finger, the controller 180 sets the different piece of person information to correspond to the fingerprints of the different fingers. For example, as illustrated in FIG. 10, among the multiple fingers, person information on a person A is set to correspond to the first finger, and person information on a person B is set to correspond to the second finger different from the first finger. In this manner, the controller 180 sets the different pieces of person information to correspond to the fingerprints of the different fingers and thus executes the functions associated with the different persons in an easier manner.

According to the recognized fingerprint of the finger, the controller 180 executes the function linked to the recognized fingerprint of the finger using the different pieces of person information. That is, the controller 180 set the different pieces of person information to correspond to the fingerprints of the different finger and executes the function linked to the finger using the different pieces of person information. The function linked to the recognized fingerprint of the finger is a function associated with the person information, such as a function of transmitting a message and a function of searching for information relating to the person information. That is, the function linked to the recognized fingerprint of the finger includes various functions that use the person information.

When the fingerprint of the finger is recognized, the controller 180 executes the function linked to the fingerprint using the person information that is set to correspond to the recognized fingerprint of the finger and outputs the graphic object associated with the person information that is set to correspond to the recognized fingerprint of the finger. At this point, the case where the fingerprint of the finger is recognized includes all the cases described referring to FIG. 5.

If the graphic object associated with the person information that is set to correspond to the fingerprint of the finger, the controller 180 determines whether or not the function associated with the person information is executed, based on the touch that is applied to the graphic object associated with the person information. For example, when the graphic object is selected, the controller 180 executes the function linked to the fingerprint using the person information. In addition, in a state where the graphic object associated with the person information, if the graphic object is not selected, the controller 180 does not execute the function linked to the fingerprint.

For example, an icon corresponding to a specific application is output to the region in which the fingerprint of the finger that the person information is set to correspond to is recognized. At this point, the controller 180 outputs the graphic object associated with the person information to the vicinity of the icon. At this point, when the graphic object is selected, the controller 180 executes the application corresponding to the icon in such a manner as to execute the function that uses the person information. In a state where the graphic object is output, when the touch is applied to the icon without selecting the graphic object, the controller 180 executes the specific application.

According to one embodiment of the present invention, as illustrated in FIG. 11A(a), an icon 1110 corresponding to a message transmitting application is output to the display unit 151.

At this point, if the fingerprint of the finger applied to the icon 1110 is recognized, as illustrated in FIG. 11A(a), the controller 180 outputs a graphic object 1120 indicating the person information that is set to correspond to the recognized fingerprint of the finger.

In this case, the controller 180 determined whether or not the function associated with the person information is executed, based on whether or not the graphic object is selected. For example, as illustrated in FIG. 11A(b), if the graphic object 1120 associated with the person information is selected, the controller 180 executes the message transmitting application in such a manner as to execute the function that use the person information. For example, the person information relating to the person A is set to correspond to the recognized fingerprint of the finger and the graphic object associated with the person A is selected, the controller 180 transmits a message to an external device associated with the person A.

In addition, when the fingerprint of the finger applied to a region to which the icon corresponding to the specific application is output is recognized, the controller 180 outputs to the vicinity of the icon a function list that corresponds to at least one function that is executed using the person information that is set to correspond to the fingerprint of the finger. At this point, the case where the fingerprint of the finger is recognized includes all the cases described referring to FIG. 5.

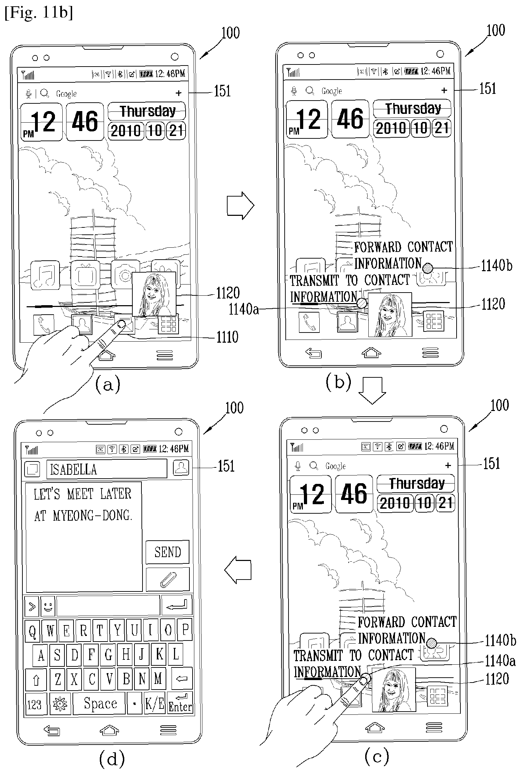

For example, if the icon is an icon corresponding to the message transmitting application, the at least function includes a function of transmitting the message to the external device associated with the person information and a function of transmitting contact information relating to the person information to the external device selected by the user. As illustrated in FIGS. 11B(a) and 11B(b), when the fingerprint of the finger the touch of which is applied to the icon corresponding to the message transmitting application is recognized, the controller 180 outputs a function list that includes function items 1140a and 1140b that correspond to at least one function, to the vicinity of the icon.

After the list that includes the function items 1140a and 1140b, is output, based on the application of the user's touch to any function item 1140a among the function items 1140a and 1140b that make up the function list, the controller 180 executes an application corresponding to the icon in such a manner as to execute the function that results from applying the user's touch. For example, as illustrated in FIGS. 11B(c) and 11B(d), based on the application of the touch to the function item for transmitting the message to the external device associated with the person information among the function items that make up the function list, the controller 180 executes the message transmitting application in such a manner as to execute the function that results from applying the touch and thus enables the contact information relating to the person information to be input in such a manner as to transmit the message to the external device associated with the person information.

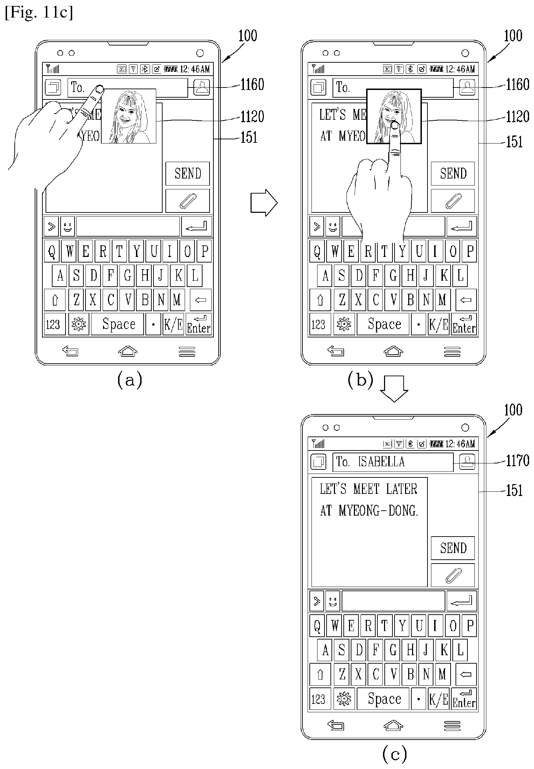

In addition, according to the embodiment of the present invention, after a message application is executed, even though the fingerprint of the finger, the touch of which is applied to a window 1160 for inputting information on the external device to which the message is to be transmitted, is recognized, the person information that is set to correspond to the fingerprint is used. For example, referring to FIG. 11C(a), when the fingerprint of the finger, the touch of which is applied to the window 1160 for inputting the information on the external device to which the message is to be transmitted, is recognized, the graphic object 1120 associated with the person information that is set to correspond to the fingerprint is output to the vicinity of the region in which the fingerprint is recognized.

Thereafter, when the graphic object 1120 is selected, contact information 1170 relating to the person information is output in such a manner as to transmit the message to the external device associated with the person information.

As another example, the controller 180 detects information relating to the person information, among pieces of information stored in the memory unit 160, using the person information that is set to correspond to the fingerprint.

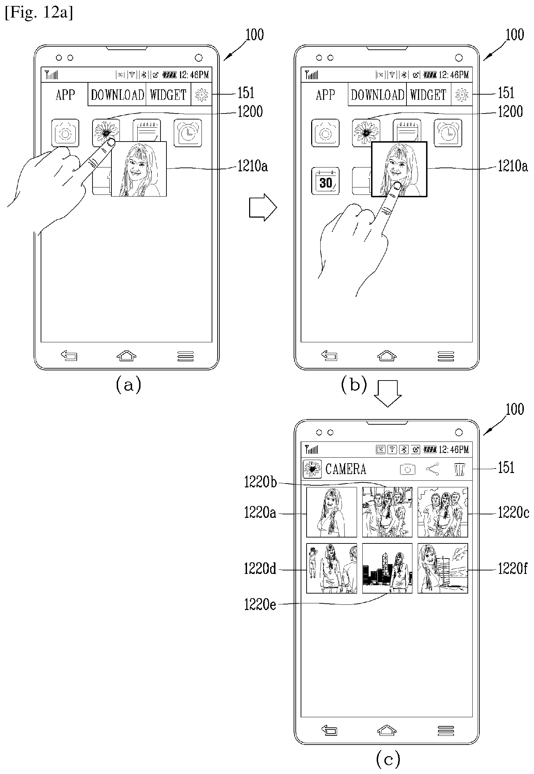

As illustrated in FIG. 12A(a), an icon 1200 corresponding to an application that has a function of outputting an image is output to the display unit 151. The application that has the function of outputting the image is an application that has a function of outputting a still image (or an image) or at least one portion of a moving image that is stored in the memory unit 160. A case where an image is output is described below, but according to the embodiment of the present invention, a moving image may be output as well.

When the fingerprint of the finger the touch of which is applied to an icon corresponding to the application that has the function of outputting the image, the controller outputs a graphic object 1210a indicating the person information to the vicinity of the icon.

At this point, when a predetermined-type touch is applied, the controller 180 recognizes the fingerprint that results from applying such a touch. For example, if a long touch or a touch an area of which is a predetermined area or more is applied, the controller 180 recognizes the fingerprint that results from applying such a touch. That is, the case where the fingerprint of the finger is recognized includes all the cases described referring to FIG. 5.

The controller 180 determines whether or not the function is executed using the person information that is set to correspond to the fingerprint, based on whether or not the graphic object is selected.

When a graphic object 1200 is selected, the controller 180 executes an application that has the function of outputting the image in such a manner as to execute the function associated with the person information. On the other hand, in a state where the graphic object is output, when the icon is selected without selecting the graphic object, the controller 180 executes the application that has the function of outputting the image.

For example, as illustrated in FIG. 12A(b), when the graphic object 1200 associated with the person information is selected, the controller 180 detects an image associated with the person information among images stored in the memory unit 160.

Thereafter, the controller 180 outputs to the display unit 151 at least one or more images that are detected, among the images stored in the memory unit 160. For example, as illustrated in FIG. 12A(c), the controller 180 outputs at least one or more among images 1220a, 1220b, 1220c, and 1220d, 1220e, and 1220f that are associated with the person information that is set to correspond to the fingerprint of the finger.

On the other hand, if the icon 1200 corresponding to an application for outputting the image without selecting the graphic object, the controller 180 executes the application for outputting the image regardless of the person information that is set to correspond to the fingerprint. At this point, the icon 1200 corresponding to the application for outputting the image is selected by applying a short touch different from the touch the application of which results in the fingerprint recognition. That is, the controller 180 determines whether or not the fingerprint is recognized, according to a type of touch that is applied to the icon 1200. When the application for outputting the image is executed, at least one or more among the images stored in the memory unit 160 are output to the display unit 151.

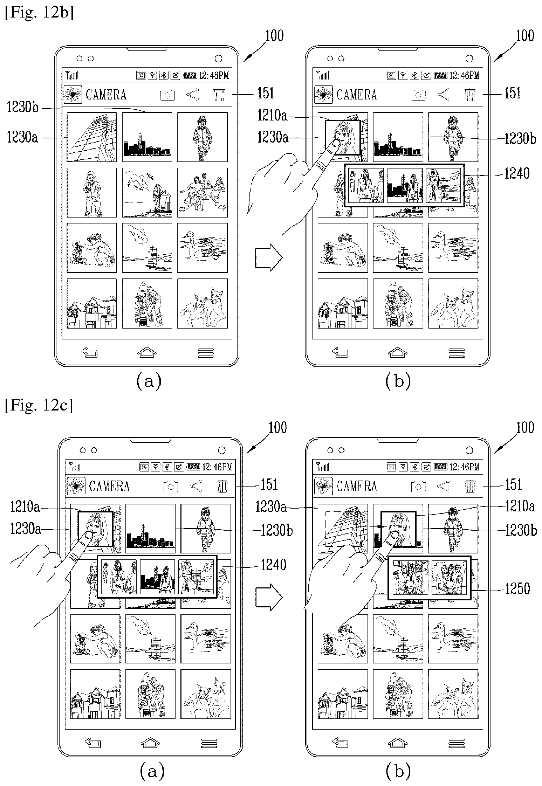

Multiple groups each of which includes at least one image are stored in the memory unit 160. At this point, as illustrated in FIG. 12B(a), when the application for outputting the image is executed, the controller 180 outputs to the display unit 151 group images 1230a and 1230b that correspond to the multiple groups, respectively.

At this point, the fingerprint of the finger the touch of which is applied to one image 1230a among the multiple group images 1230a and 1230b is recognized. At this point, the controller 180 detects an image associated with the person information, among at least one or more images that are included in the group corresponding to one image 1230a among the multiple group images 1230a and 1230b.

Thereafter, the controller 180 outputs an image 1240 that is detected, to the vicinity of one group image in such a manner that the image 1240 is superimposed. For example, as illustrated in FIG. 12B(b), the image 1240 associated with the person information that is included in one group is output in the form of a preview.

On the other hand, the image in the form of a preview is changed based on the fingerprint of the finger the touch of which is applied to one group. For example, when the fingerprint of the first finger is recognized, the controller 180 detects the image associated with the person information that is set to correspond to the fingerprint of the first finger and outputs that image in the form of a preview. When the fingerprint of the second finger different from the first finger is recognized, the controller 180 detects the image associated with the person information that is set to correspond to the fingerprint of the second finger and outputs that image in the form of a preview.

In addition, when the touch of the finger is released from the display unit 151, the image in the form of a preview is no longer output on the display unit 151.

On the other hand, based on a predetermined-type touch input that is applied to each of the multiple group images, the controller 180 determines whether or not the image in the form of a preview is output. The predetermined-type touch may be a drag input that is applied to the multiple group images. At this point, the controller 180 executes a function linked to the fingerprint with the touch being currently applied to the group image among the multiple group images.

For example, as illustrated in FIG. 12C(a) and 12C(b), the user can move the region in which the fingerprint of the finger is recognized, in a state where the fingerprint of the finger the touch of which is applied to the one group image 1230a among the multiple group images is recognized and the image 1240 associated with the person information that is set to correspond to the fingerprint of the finger is output. For example, the region in which the touch of the finger is detected is moved from a region to which one group image is output to a region to which a different group image 1230b is output. At this point, the controller 180 no longer outputs the detected image to one group to which the touch of the finger is not applied. In addition, the controller 180 detects an image 1250 associated with the person information that is set to correspond to the recognized fingerprint from a group corresponding to the different group image 1230b. In this case, as illustrated in FIG. 12C(b), the detected image 1250 is output, in the form of a preview, to the vicinity of the different group image 1230b.

As another example, one image 1250 among the multiple images stored in the memory unit 160 is output to the display unit 151. At this point, the controller 180 outputs the image associated with the person information that is set to correspond to the recognized fingerprint of the finger, among the multiple images, using the person information that is set to correspond to the fingerprint of each of the user's fingers. At this point, the controller 180 outputs the images associated with the different pieces of person information according to the recognized fingerprint of the finger.

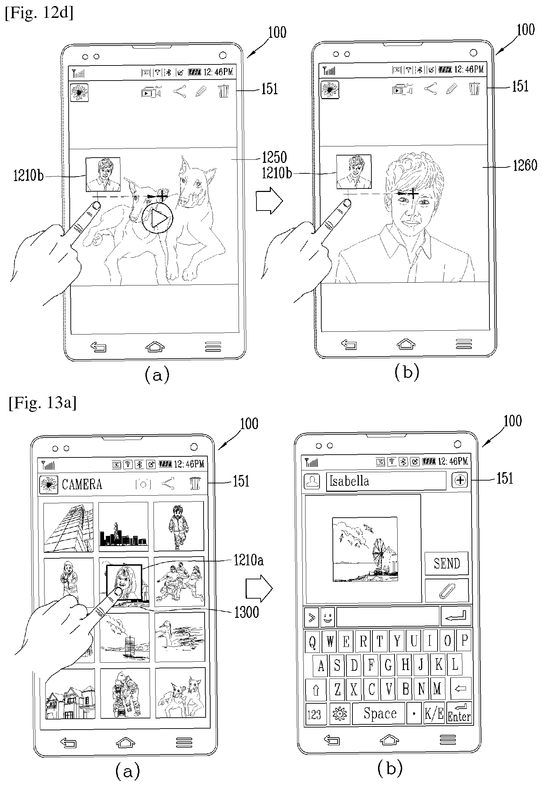

For example, as illustrated in FIG. 12D(a), one image 1250 among the multiple images stored in the memory unit 160 is output to the display unit 151. At this point, the controller 180 recognizes the fingerprint of the finger the touch of which is applied to one image 1250 that is output to the display unit 151. When the fingerprint is recognized, the controller 180 detects at least one image associated with the person information that is set to correspond to the fingerprint, among the multiple images.

When after the fingerprint recognition, the touch is applied to one image that is output, the controller 180 outputs one among at least one or more images that are detected. At this point, the touch is a flicking input.

For example, as illustrated in FIG. 12D(b), in response to the flicking input that is applied after the fingerprint recognition, the controller 180 outputs one image 1260 among the detected images to the display unit 151 instead of one image 1250.

As described above, the image is output in response to the touch that is applied after the fingerprint recognition is one among one or more images that are detected. On the other hand, if the fingerprint is not recognized, the image that is output in response to the touch is one among the multiple images stored in the memory unit 160.

The method is described above in which if the person information is set to correspond to the fingerprint of the finger, the function associated with the fingerprint is executed using the person information that is set. Accordingly, according to the embodiment of the present invention, the method is provided in which each function associated with the person information is executed in an easier manner, using the fingerprint recognition of the finger.

A method is described below in which information that is output to the display unit 151 is transmitted using the person information that is set to correspond to the fingerprint of the finger.

The controller 180 immediately transmits the screen information that is output to the display unit 151, to the external device associated with the person information, using the person information that is set to correspond to the fingerprint of the finger.

For example, as illustrated in FIG. 13A(a), at least one or more among the multiple images stored in the memory unit 160 are output to the display unit 151. At this point, the fingerprint of the finger the touch of which is applied to one among at least one or more images is recognized. At this point, as described above referring to FIG. 5, the fingerprints of the fingers all touches of which are applied to the display unit 151 may be recognized, or the fingerprint may be recognized in response to the application of the predetermined-type touch to the display unit 151.

When the fingerprint is recognized, the controller 180 executes an application associated with information transmission in order to transmit one image in which the fingerprint is recognized, to the external device associated with the person information that is set to correspond to the fingerprint. For example, as illustrated in FIG. 13A(b), the controller 180 executes the message application in such a manner as to transmit the one image to the external device associated with the person information.

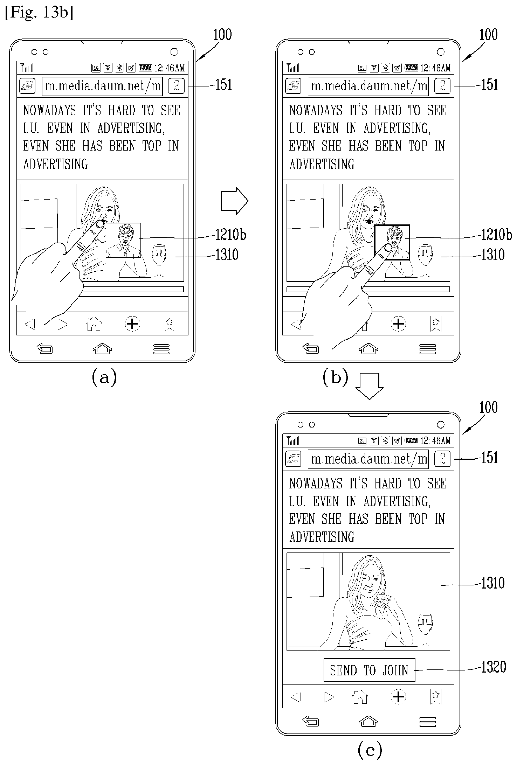

As another example, as illustrated in FIG. 13B(a), the screen information associated with the web browser application is output to the display unit 151. At this point, when the fingerprint of the finger the touch of which is applied to one region of the screen information is recognized, the controller 180 transmits the information that is output to the region in which the fingerprint is recognized, to the external device associated with the person information that is set to correspond to the fingerprint.

In addition, as illustrated in FIG. 13B(c), when the information is transmitted to the external device, an alert information 1320 that alerts the user that the information is transmitted is output to one region of the display unit 151.

The method is described above in which the information is transmitted using the person information that is set to correspond to the fingerprint. Accordingly, according to the embodiment of the present invention, the information is transmitted to the external device in an easy, fast manner, using only the fingerprint, without executing the message application.

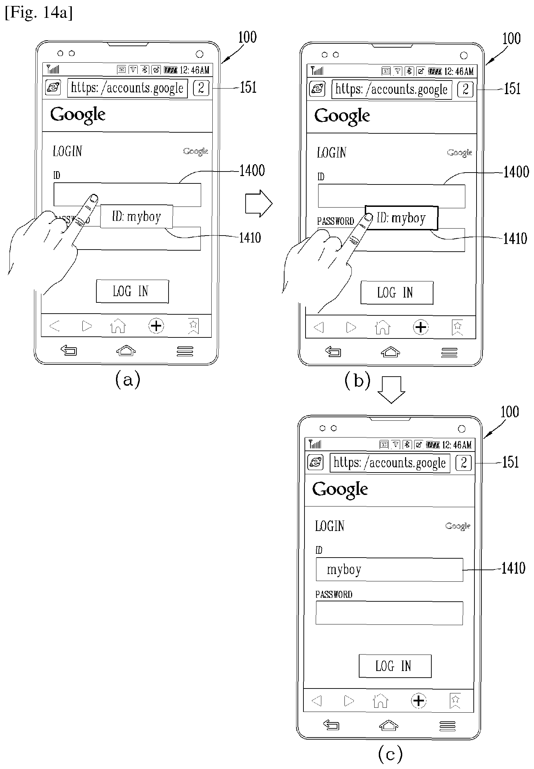

A method is described below in which if personal information associated with security is set to correspond to each fingerprint, the personal information associated with the security is used. FIGS. 14A(a) to 14A(c), 14B(a) to 14B(c), and 14C(a) to 14C(c) are diagrams illustrating the method of using the personal information associated with the security.

The information that is set to correspond to the fingerprint is the person information and is the personal information associated with the security. The personal information relating to the security includes ID information, password information, address information, email address, and the like. At this point the pieces of personal information relating to different kinds of security are matched with the fingerprints of the different fingers, or the pieces of personal information relating to the multiple kinds of security are matched with the fingerprint of one finger.

By using this, the controller 180 enables the personal information relating to the security to be input without the need to directly input the personal information relating to the security. In addition, according to the embodiment of the present invention, the information that is input using the fingerprint recognition is not limited to the personal information relating to the security and various pieces of information are input using the fingerprint recognition.

For example, as illustrated in FIG. 14A(a), pieces of information relating to the different types of security are matched to the fingerprints of the different fingers. At this point, the controller 180 outputs a personal information input region 1400 for inputting the personal information relating to the security.

At this point, as illustrated in FIGS. 14A(b) and 14A(c), when the fingerprint of the finger to which the personal information relating to the security is set to correspond is recognized in the personal information input region, information 1410 matched with the recognized fingerprint of the finger is input. At this point, the fingerprint of the finger is recognized when a predetermined-type touch is applied. On the other hand, when a touch other than the predetermined-type touch is applied, the controller 180 determines this as selecting the personal information input region without the fingerprint of the finger being recognized.

When the fingerprint of the finger is recognized, the controller 180 may enable the matched information to be immediately input and may output a graphic object 1410 corresponding to the matched information in order to ask whether or not the matched information is input.

If the graphic object 1410 associated with the matched information is output, when the touch is applied to the graphic object 1410, the controller 180 enables the information corresponding to the graphic object 1410 to be into the personal information input region.

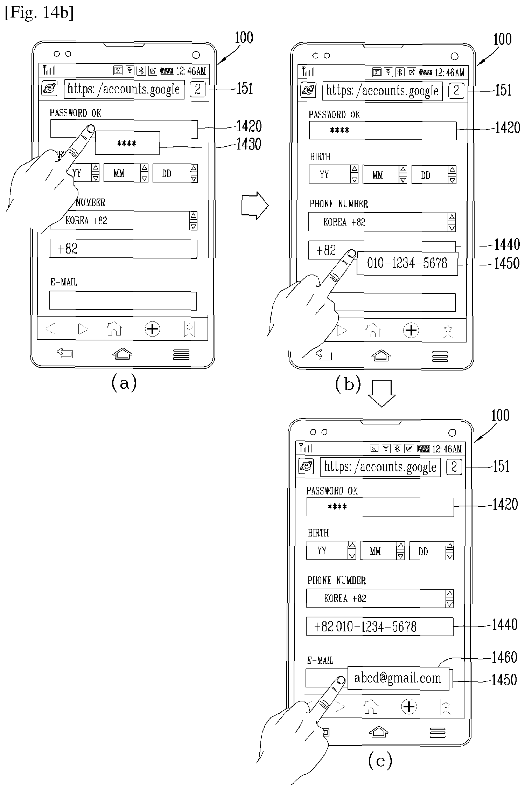

As another example, as illustrated in FIG. 14B(a), the pieces of information relating to the multiple types of security are matched with one finger. In this case, the controller 180 enables different pieces of personal information to be input according to the personal information that is required by personal information input regions 1420 and 1440 that are output to the region in which the fingerprint is recognized. That is, the controller 180 analyzes the information that is output to the region in which the fingerprint is recognized and enables the different pieces of personal information to be input according to the analyzed information.

For example, as illustrated in FIG. 14B(a), in a case of the personal information input region 1420 into which the password information is input, the controller 180 determines the personal information that is required by the personal information input region and enables the password information to be input.

In addition, as illustrated in FIG. 14B(b), in a case of the personal information input region 1440 into which the contact information is input, the controller 180 determines the personal information that is required by the personal information input region and enables the contact information to be input.

As illustrated in FIG. 14B(c), also in a case of a personal information input region 1450 into which email information is input, the controller 180 enables the email information to be input.

On the other hand, if the fingerprint is recognized and the graphic object corresponding to the information that is matched with the fingerprint is output, if a predetermined-type touch is applied to the graphic object, the controller 180 does not enable the matched information to be input. In addition, when the predetermined-type touch is applied to the graphic object, the controller 180 deletes the information matched with the fingerprint from the memory unit 160. That is, when the information matched with the fingerprint is deleted, even though the fingerprint is recognized thereafter, the graphic object associated with the information matched with the fingerprint is not output. At this point, the predetermined-type touch includes various types of touches, such as flicking, a drag, and a double touch.

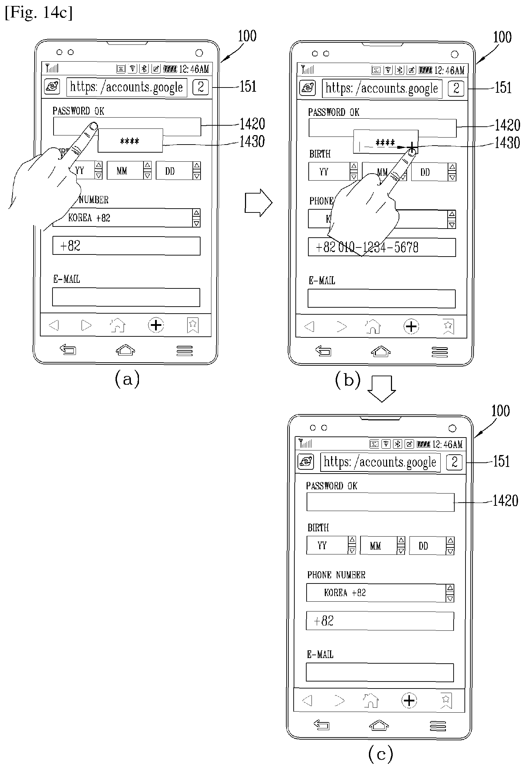

For example, as illustrated in FIG. 14C(b) and 14C(c), even though the fingerprint of the finger the touch of which is applied to the personal information input region 1420 into which confidential information is input is recognized, the controller 180 does not enable the confidential information matched with the fingerprint to be input, based on the application of the flicking input to the graphic object as illustrated in the confidential information. In addition, the controller 180 deletes the confidential information matched with the fingerprint from the memory unit 160, based on the application of the flicking input to the graphic object.

The method is described above in which if the personal information relating to the security is set to correspond to the fingerprint of the finger, this setting is used. Accordingly, according to the embodiment of the present invention, the present invention that is required to be repeatedly input is input in an easy manner and because the inputting is through the fingerprint recognition, the security of the personal information is more enhanced.

The mobile terminal according to the embodiments of the present invention is described above on the assumption that the fingerprint recognition is executed. A type of touch method is described in more detail below which is applied to the display unit 151 in order to execute the fingerprint recognition. The type of touch to be described below can be applied to the mobile terminal according to the embodiments of the present invention.

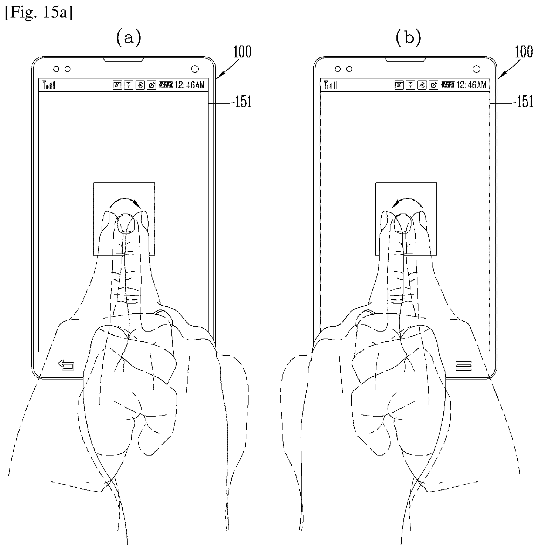

A predetermined-type of touch in which the fingerprint recognition is executed on the display unit 151 is described below. FIGS. 15A(a) and 15A(b), 15B, and 15C are diagrams illustrating one example of a touch in which the fingerprint recognition is executed.

The controller 180 may always execute (or activate) the fingerprint recognition function in the background, may execute the fingerprint recognition function, based on the user's selection, and may execute the fingerprint recognition function, based on the application of the predetermined-type touch.

If the fingerprint recognition function is executed based on the user's selection, a graphic object associated with the fingerprint recognition function is output to one region of the display unit 151. The graphic object associated with the fingerprint recognition function may be output to the status indication bar that indicates status information on the mobile terminal and may be output, in the form of an icon, to one region of the display unit 151. At this point, when the touch is applied to the graphic object, the controller 180 executes the fingerprint recognition function.

In addition, the controller 180 executes the fingerprint recognition function, based on the application of the predetermined-type touch. The predetermined-type touch is a different touch from a common short touch or a common long touch in order for the controller 180 to recognize the fingerprint of the finger the touch of which is applied to the display unit 151 by the user. For example, in order for the controller 180 to recognize the fingerprint, the user can apply the touch in such a manner as to get the feeling that the touch is applied with higher pressure than when the common long touch is applied. At this time, the controller 180 distinguishes between the long touch and the touch for the fingerprint recognition, based on the pressure applied to the display unit 151. In addition, in addition to the touch that is applied with higher pressure, the predetermined-type touch includes a touch that is applied for a predetermined time or more, a touch that is applied to a predetermined area or more, and a touch that is applied in a predetermined direction. The predetermined-type touch is set by the user or is set in advance.

For example, the user applies the touch to one region of the display unit 151 and while maintaining the touch as is, rotates his/her finger the touch of which is applied in a specific direction. At this point, the user can rotate only his/her finger the touch of which is applied in the specific direction without moving a position to which the touch is applied. At this point, when the touch is applied, the controller 180 detects that an area to which the touch is applied is increased and when the area is increased to a predetermined area or more, executes the fingerprint recognition function.

For example, referring to FIGS. 15A(a) and 15A(b), the user can rotate his/her finger the touch of which is applied, with the position of the touch being fixed to one region of the display unit 151. At this point, the controller 180 determines whether or not the fingerprint recognition function is executed, according to whether the touch is applied to the predetermined area or more and according to the direction in which the finger the touch of which is applied is rotated.

For example, as illustrated in FIG. 15A(a), if the touch is applied to the predetermined area or more and the finger the touch of which is applied is rotated to the right of a starting point of the touch, the controller 180 executes the fingerprint recognition function.

In addition, as illustrated in FIG. 15A(b), if the touch is applied to the predetermined area or more and the finger the touch of which is applied is rotated in the leftward direction from the starting point of the touch, the controller 180 terminates the fingerprint recognition function.

As another example, when the touch is applied in a predetermined direction, the controller 180 executes the fingerprint recognition function. At this point, the touch that is applied in the predetermined direction is a touch that is moved a predetermined distance from the first point of the touch in the upward and downward directions, while maintaining the touch starting with the first point of the touch on the display unit 151, to which the touch is applied.

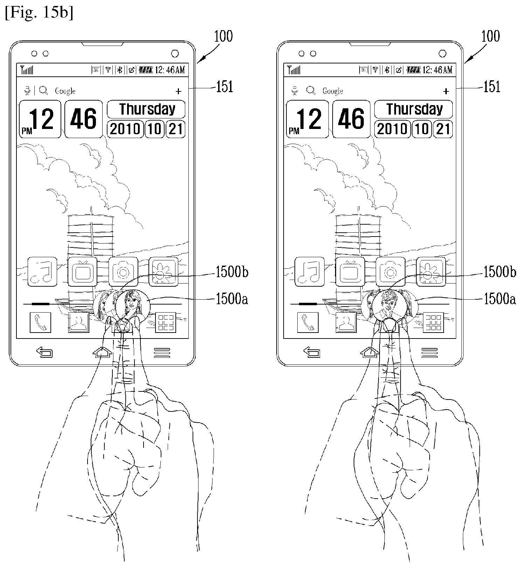

FIGS. 15B is a diagram illustrating that if the touch is applied to the predetermined area or more and thus the fingerprint of the finger the touch of which is applied is recognized, the graphic object associated with the function linked to the rotation direction of the touch and to the extent of the rotation (or associated with the information that is set to correspond to the fingerprint) is output.

If the touch that is applied to the display unit 151 is a touch the area of which is the predetermined area or more, the controller 180outputs the graphic objects associated with the different functions that correspond to the rotation direction of the touch and the extent of the rotation. The extent of the rotation may be expressed in terms of the time for which the rotation is made in the rightward direction after the touch is applied. At this point, pieces of matching information in which the different functions are matched according to the extent of the rotation are stored in the memory unit 160.

The different functions corresponding to the rotation direction of the fingerprint and the extent of the rotation are set based on the user's selection, or the function a predetermined condition of which is satisfied is automatically set. At this point, the predetermined condition may be a usage.

The controller 180 outputs the graphic object associated with a function matched with the extent of the rotation using the matching information. At this point, the graphic object is output to the vicinity of the region in which the fingerprint is recognized.

For example, after applying the touch to one region of the display unit 151, the user can rotate his/her finger with the position of the touch being fixed. At this point, if the touch is rotated in the rightward direction, the controller 180 outputs the graphic object associated with the function (or information that is set to correspond to the fingerprint, or a menu associated with the recognized fingerprint) matched with the extent to which the touch is rotated.

At this point, graphic objects 1500a and 1500b are output in order to alert the user to the different functions that are set according to the extent of the rotation. For example, as illustrated in FIG. 15B, the graphic objects 1500a and 1500b associated with the different pieces of person information are output to the vicinity of the region in which the fingerprint is recognized, according to the time for which the touch is applied and the direction of the touch. At this point, with regard to the graphic objects 1500a and 1500b, only the graphic object corresponding to the extent of the rotation may be output. In addition, the multiple graphic objects that are matched with the extent of the rotation of the fingerprint may be output at a time, and the graphic object corresponding to the extent of the current rotation, among the multiple graphic objects, may be output in such a manner that it is visually distinguishable from the other graphic objects.

For example, as illustrated in FIG. 15B, in a case of the graphic object 1500a corresponding to the extent of the current rotation, the controller 180 outputs the entire graphic object 1500a. In a case of the graphic object 1500b other than the graphic object 1500a that is output in its entirety, the controller 180 outputs only one portion of the graphic object 1500b. Therefore, the user can get the feeling that he/she turns over a page, according to the extent to which the graphic object is rotated.

At this point, in order to select one among the multiple functions that are set according to the extent to which the finger is rotated, the user can release the applied touch of the finger from the display unit 151 or can apply a predetermined-type touch to one among the graphic objects corresponding to the multiple functions. At this point, when the applied touch is released, the controller 180 executes a function that uses the person information corresponding to the graphic object that is output or executes a function that uses the person information corresponding to the graphic object to which the predetermined-type touch is applied.

In addition, when the fingerprint of the user's finger is detected, the controller 180 outputs to the display unit 151 the graphic objects 1500a, 1500b, and 1500c corresponding to the pieces of information linked to the fingerprints of the fingers.

At this point, the function linked to the fingerprint is for outputting the graphic object corresponding to the function (or the information) that can be used on the screen information that is output to the region in which the fingerprint is recognized. For example, if the screen information that is output to the region in which the fingerprint is recognized is screen information that is associated with the message application, the controller 180 outputs the graphic object corresponding to the person information that can be used on the message application.

In addition, the person information that is set to correspond to the fingerprint is set in advance or is set according to the frequency with which the user of the mobile terminal uses the person information. For example, the person information that is set to correspond to the fingerprint is person information that is associated with a person whom the user frequently contacts.

The graphic objects 1500a, 1500b, and 1500c are output to the vicinity of the region to which the touch of the finger is applied, in order to prevent the finger from covering the graphic objects 1500a, 1500b, and 1500c. In addition, the graphic objects 1500a, 1500b, and 1500c are output to the vicinity of the region in which the user's current fingerprint is recognized, in such a manner that the user conveniently applies the touch to the graphic objects 1500a, 1500b, and 1500c. For example, the graphic objects 1500a, 1500b, and 1500c are output to over the region in which the fingerprint of the finger is recognized. In addition, the graphic objects 1500a, 1500b, and 1500c are output to the left of or to the right of the region in which the fingerprint of the finger is recognized.

At this point, the user can apply the drag input to one graphic object 1500a among the multiple graphic objects.

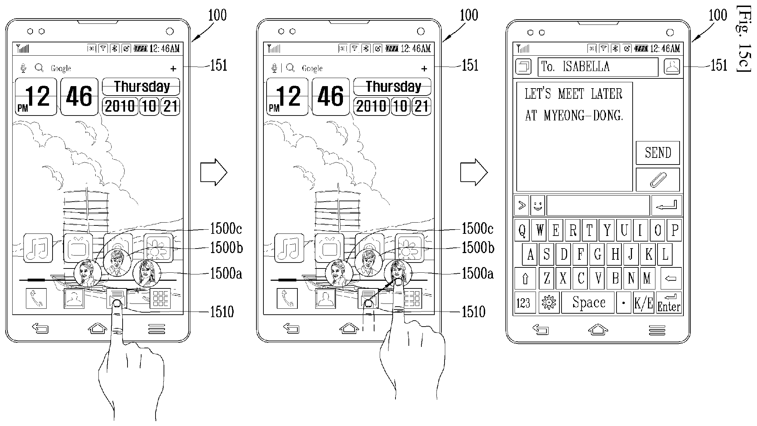

The controller 180 executes the function associated with the person information corresponding to the graphic object 1500a to which the drag input is applied. For example, as illustrated in FIG. 15C, if the multiple graphic objects 1500a, 1500b, and 1500c are output at the same time, the user can apply the drag input to one graphic object 1500a among the multiple graphic objects 1500a, 1500b, and 1500c. When one graphic object is selected, the controller 180 executes the message application in such a manner as to transmit a message to the external device associated with the person information corresponding to the graphic object 1500a.

The executing of the fingerprint recognition function according to the touch type is described above. Accordingly, according to the embodiment of the present invention, the fingerprint recognition function is executed only when a specific touch is applied. This consumes less battery power than when the fingerprint recognition function is always executed in the background. In addition, according to the embodiment of the present invention, the touch for recognizing the fingerprint and the common touch are distinguished and thus the function that is executed by executing the fingerprint recognition function and the function that is executed by applying the common touch are better distinguished. This prevents unnecessary fingerprint recognition.

According to the present invention, when the touch of the finger is applied, the fingerprint of the finger the touch of which is applied is recognized, and the function linked to the recognized fingerprint is executed. Therefore, according to the embodiment of the present invention, the function linked to the fingerprint is immediately
executed using only the fingerprint recognition, without a separate key operation.

In addition, according to the embodiment of the present invention, various functions are executed by matching the person information or the personal information with the fingerprint of the finger and thus by using the pieces of matching information.

In addition, according to one embodiment disclosed in the present specification, the method described above may be realized by being stored as processor-readable codes in a program-stored medium. A ROM, a RAM, a CD-ROM, a magnetic tape, a floppy disk, an optical data storage device and the like are examples of the processor-readable medium, and the processor-readable medium may be realized in the form of a carrier wave (for example, a transmission over the Internet).

The configuration and the method of the embodiments according to the present invention, described above, are not applied in a limiting manner, but all of or some of the embodiments may be selectively combined with each other to create various modifications to the embodiments.

It will also be apparent to those skilled in the art that various modifications and variations can be made in the present invention without departing from the scope of the invention. Thus, it is intended that the present invention cover modifications and variations of this invention provided they come within the scope of the appended claims and their equivalents.

## Claims

1. A mobile terminal comprising:
a touch screen (151) configured to display information and receive a touch input; and
a controller(180) configured to : detect the touch input on the touch screen (151);
determine a fingerprint corresponding to the touch input applied on a region included in the touch screen(151);
execute a function corresponding to the determined fingerprint;
**characterized in that**:
the determined fingerprint is matched with a plurality of personal information, and the controller(180) is further configured to :
analyze screen information that is output to the region where the touch input is applied when the determined fingerprint is matched with the plurality of personal information ;
determine personal information, among the plurality of personal information, based on the analyzed screen information, wherein the determined personal information is required by the analyzed screen information ;
input the determined personal information, among the plurality of the personal information to the region where the touch input is applied.

2. The mobile terminal of claim 1, wherein the touch screen further comprises a fingerprint recognition unit configured to recognize a fingerprint corresponding to a touch input applied on the touch screen(151), and
wherein the controller(180) determines the fingerprint received by the fingerprint recognition unit.

3. The mobile terminal of claim 1, wherein an icon corresponding to a specific application is output on the touch screen(151), and
wherein the controller(180) outputs a graphic object indicating person information set to the determined fingerprint in the vicinity of the region to which the icon is output, when the touch input corresponding to the determined fingerprint applied to the icon.

4. The mobile terminal of claim 3, wherein the controller (180) executes the specific application in response to a touch input applied to the icon such that the specific application is executed using the person information set to the determined fingerprint corresponding to the touch input.

5. The mobile terminal of claim 1, wherein the controller (180) determine the fingerprint corresponding to the touch input applied to the touch screen(151), based on at least one, among a case in which the touch input is applied for a predetermined time or more or a case in which the touch input is applied to a predetermined area or more,

6. A method of controlling a mobile terminal, comprising:
displaying screen information on a touch screen(151);
receiving a touch input applied on a region included in the touch screen(151) ;
determining a fingerprint corresponding to the touch input;
executing a function, wherein the function corresponds to the determined fingerprint,
**characterized in that**:
the determined fingerprint is matched with a plurality of personal information, and
the method is further comprising :
analyzing screen information that is output to the region where the touch input is applied when the determined fingerprint is matched with the plurality of personal information ;
determining personal information, among the plurality of personal information, based on the analyzed screen information, wherein the determined personal information is required by the analyzed screen information ;
inputting the determined personal information, among the plurality of the personal information to the region where the touch input is applied.

## Patentansprüche

1. Mobiles Endgerät, das aufweist:
einen Berührungsbildschirm (151), der konfiguriert ist, um Informationen anzuzeigen und eine Berührungseingabe zu empfangen; und
eine Steuerung (180), die konfiguriert ist, um:
die Berührungseingabe auf dem Berührungsbildschirm (151) zu erfassen;
einen Fingerabdruck zu bestimmen, der der Berührungseingabe entspricht, die auf einen in dem Berührungsbildschirm (151) enthaltenen Bereich angewendet wird;
eine dem bestimmten Fingerabdruck entsprechende Funktion auszuführen;
**dadurch gekennzeichnet, dass**:
der bestimmte Fingerabdruck mit mehreren persönlichen Informationen abgeglichen wird, und die Steuerung (180) ferner konfiguriert ist, um:
Bildschirminformationen, die in dem Bereich ausgegeben werden, wo die Berührungseingabe angewendet wird, zu analysieren, wenn der bestimmte Fingerabdruck mit den mehreren persönlichen Informationen abgeglichen ist;
basierend auf den analysierten Bildschirminformationen persönliche Informationen aus den mehreren persönlichen Informationen zu bestimmen, wobei die bestimmten persönlichen Informationen von den analysierten Bildschirminformationen benötigt werden;
die bestimmten persönlichen Informationen von den mehreren persönlichen Informationen in dem Bereich einzugeben, wo die Berührungseingabe angewendet wird.

2. Mobiles Endgerät nach Anspruch 1, wobei der Berührungsbildschirm ferner eine Fingerabdruckerkennungseinheit aufweist, die konfiguriert ist, um einen Fingerabdruck, der einer auf den Berührungsbildschirm (151) angewendeten Berührungseingabe entspricht, zu erkennen, und
wobei die Steuerung (180) den Fingerabdruck, der von der Fingerabdruckerkennungseinheit empfangen wird, bestimmt.

3. Mobiles Endgerät nach Anspruch 1, wobei ein Piktogramm, das einer spezifischen Anwendung entspricht, auf dem Berührungsbildschirm (151) ausgegeben wird, und
wobei die Steuerung (180) ein Graphikobjekt ausgibt, das in der Nachbarschaft des Bereichs, in dem das Piktogramm ausgegeben wird, Personeninformationen anzeigt, die für den bestimmten Fingerabdruck festgelegt sind, wenn die Berührungseingabe, die dem bestimmten auf das Piktogramm angewendeten Fingerabdruck entspricht, auf das Piktogramm angewendet wird.

4. Mobiles Endgerät nach Anspruch 3, wobei die Steuerung (180) ansprechend auf eine Berührungseingabe, die auf das Piktogramm angewendet wird, die spezifische Anwendung ausführt, so dass die spezifische Anwendung unter Verwendung der Personeninformationen ausgeführt wird, die für den bestimmten Fingerabdruck, der der Berührungseingabe entspricht, festgelegt sind.

5. Mobiles Endgerät nach Anspruch 1, wobei die Steuerung (180) den Fingerabdruck, der der auf den Berührungsbildschirm (151) angewendeten Berührungseingabe entspricht, basierend auf einem Fall, in dem die Berührungseingabe eine vorgegebene Zeit lang oder länger angewendet wird, und/oder einem Fall, in dem die Berührungseingabe auf einen vorgegebenen Bereich oder mehr angewendet wird, bestimmt.

6. Verfahren zur Steuerung eines mobilen Endgeräts, das aufweist:
Anzeigen von Bildschirminformationen auf einem Berührungsbildschirm (151);
Empfangen einer Berührungseingabe, die auf einen in dem Berührungsbildschirm (151) enthaltenen Bereich angewendet wird;
Bestimmen eines Fingerabdrucks, welcher der Berührungseingabe entspricht;
Ausführen einer Funktion, wobei die Funktion dem bestimmten Fingerabdruck entspricht,
**dadurch gekennzeichnet, dass**:
der bestimmte Fingerabdruck mit mehreren persönlichen Informationen abgeglichen wird, und wobei das Verfahren ferner aufweist:
Analysieren von Bildschirminformationen, die in dem Bereich ausgegeben werden, wo die Berührungseingabe angewendet wird, wenn der bestimmte Fingerabdruck mit den mehreren persönlichen Informationen abgeglichen ist;
Bestimmen persönlicher Informationen aus den mehreren persönlichen Informationen basierend auf den analysierten Bildschirminformationen, wobei die bestimmten persönlichen Informationen von den analysierten Bildschirminformationen benötigt werden;
Eingeben der bestimmten persönlichen Informationen von den mehreren persönlichen Informationen in dem Bereich, wo die Berührungseingabe angewendet wird.

## Revendications

1. Terminal mobile comprenant :
un écran tactile (151) configuré pour afficher des informations et recevoir une entrée tactile ; et
un dispositif de commande (180) configuré pour : détecter l'entrée tactile sur l'écran tactile (151) ;
déterminer une empreinte correspondant à l'entrée tactile appliquée sur une région incluse dans l'écran tactile (151) ;
exécuter une fonction correspondant à l'empreinte déterminée ;
**caractérisé en ce que** :
l'empreinte déterminée est mise en concordance avec une pluralité d'informations personnelles, et le dispositif de commande (180) est en outre configuré pour :
analyser une information d'écran qui est fournie en sortie à la région où l'entrée tactile est appliquée lorsque l'empreinte déterminée est mise en concordance avec la pluralité d'informations personnelles ;
déterminer une information personnelle, parmi la pluralité d'informations personnelles, d'après l'information d'écran analysée, dans lequel l'information personnelle déterminée est requise par l'information d'écran analysée ;
entrer l'information personnelle déterminée, parmi la pluralité des informations personnelles dans la région où l'entrée tactile est appliquée.

2. Terminal mobile selon la revendication 1, dans lequel l'écran tactile comprend en outre une unité de reconnaissance d'empreinte configurée pour reconnaître une empreinte correspondant à une entrée tactile appliquée sur l'écran tactile (151), et dans lequel le dispositif de commande (180) détermine l'empreinte reçue par l'unité de reconnaissance d'empreinte.

3. Terminal mobile selon la revendication 1, dans lequel une icône correspondant à une application spécifique est fournie en sortie sur l'écran tactile (151), et
dans lequel le dispositif de commande (180) fournit en sortie un objet graphique indiquant une information de personne établie pour l'empreinte déterminée à proximité de la région à laquelle l'icône est fournie en sortie, lorsque l'entrée tactile correspondant à l'empreinte déterminée est appliquée à l'icône.

4. Terminal mobile selon la revendication 3, dans lequel le dispositif de commande (180) exécute l'application spécifique en réponse à une entrée tactile appliquée à l'icône de sorte que l'application spécifique soit exécutée à l'aide de l'information de personne établie pour l'empreinte déterminée correspondant à l'entrée tactile.

5. Terminal mobile selon la revendication 1, dans lequel le dispositif de commande (180) détermine l'empreinte correspondant à l'entrée tactile appliquée à l'écran tactile (151), d'après au moins l'un parmi un cas où l'entrée tactile est appliquée pendant une durée prédéterminée ou plus ou un cas où l'entrée tactile est appliquée à une zone prédéterminée ou plus.

6. Procédé de commande d'un terminal mobile, comprenant :
l'affichage d'une information d'écran sur un écran tactile (151) ;
la réception d'une entrée tactile appliquée sur une région incluse dans l'écran tactile (151) ;
la détermination d'une empreinte correspondant à l'entrée tactile ;
l'exécution d'une fonction, dans lequel la fonction correspond à l'empreinte déterminée,
**caractérisé en ce que** :
l'empreinte déterminée est mise en concordance avec une pluralité d'informations personnelles, et
le procédé comprend en outre :
l'analyse d'une information d'écran qui est fournie en sortie à la région où l'entrée tactile est appliquée lorsque l'empreinte déterminée est mise en concordance avec la pluralité d'informations personnelles ;
la détermination d'une information personnelle, parmi la pluralité d'informations personnelles, d'après l'information d'écran analysée, dans lequel l'information personnelle déterminée est requise par l'information d'écran analysée ;
l'entrée de l'information personnelle déterminée, parmi la pluralité des informations personnelles dans la région où l'entrée tactile est appliquée.
